# EUROPÄISCHE PATENTSCHRIFT

(11) **EP 2 563 637 B1**
(45) Veröffentlichungstag und Bekanntmachung des Hinweises auf die Patenterteilung: **01.10.2014**
(21) Anmeldenummer: 11714694.4
(22) Anmeldetag: 06.04.2011
(51) Int. Cl.: B62D 1/19

(54) **LENKSÄULE FÜR EIN FAHRZEUG**
STEERING COLUMN FOR A VEHICLE
COLONNE DE DIRECTION POUR UN VÉHICULE À MOTEUR

(30) Priorität: 30.04.2010 DE 102010016712
(43) Veröffentlichungstag der Anmeldung: 06.03.2013
(73) Patentinhaber: ThyssenKrupp Presta Aktiengesellschaft, 9492 Eschen (LI)
(72) Erfinder: HEITZ, Thomas, FL-9493 Mauren (LI)
(74) Vertreter: Fechner, Thomas
(86) Internationale Anmeldenummer: PCT/EP2011/001698
(87) Internationale Veröffentlichungsnummer: WO 2011/134588

(56) Entgegenhaltungen:
- EP-A1- 0 470 888
- GB-A- 2 309 012

## Beschreibung

Die vorliegende Erfindung betrifft eine Lenksäule für ein Fahrzeug, wobei die Lenksäule eine Energieabsorptionseinrichtung zur Absorption von Energie im Falle eines Fahrzeugcrashes aufweist und die Energieabsorptionseinrichtung zumindest im Falle des Fahrzeugcrashes mindestens zwei relativ zueinander bewegbare, insbesondere relativ zueinander verschiebbare, Bauteile der Lenksäule zur Absorption der Energie miteinander verbindet.

Lenksäulen mit Energieabsorptionseinrichtungen zur Absorption von Energie im Falle eines Fahrzeugcrashes sind beim Stand der Technik bekannt. Beispielhaft wird auf die DE 601 10 870 T2 und die GB 2 435 551 A verwiesen.

Des Weiteren offenbart Dokument EP 0 470 888 A1 die Präambel des Anspruchs 1.

Aufgabe der Erfindung ist es, eine Alternative für gattungsgemäße Lenksäulen vorzuschlagen, bei der die Energieabsorptionseinrichtung mit möglichst wenig bewegbaren Teilen auskommt und einen möglichst einfachen Aufbau aufweist.

Gelöst wird die Aufgabe durch eine Lenksäule mit Merkmalen des Patentanspruchs 1, sowie durch ein Verfahren entsprechend dem Patentanspruch 11. In den abhängigen Ansprüchen sind vorteilhafte Weiterbildungen der Erfindung dargestellt.

Ein wesentlicher Aspekt ist somit, dass die Energieabsorptionseinrichtung zumindest ein sich durch thermische Beaufschlagung verformendes Verformungs-Element und zumindest eine Temperaturveränderungsvorrichtung zur Änderung der Temperatur des Verformungs-Elementes aufweist.

Ein Grundgedanke der Erfindung ist es somit, zumindest ein sich durch thermische Beaufschlagung bzw. Einwirkung verformendes Verformungs-Element bei der Energieabsorptionseinrichtung vorzusehen. Zusätzlich besitzt die erfindungsgemäße E-nergieabsorptionseinrichtung auch zumindest eine Temperaturveränderungsvorrichtung zur thermischen Beaufschlagung. Eine solche Energieabsorptionseinrichtung kann über ein Steuersignal angesteuert werden und ist einfach in ihrem Aufbau. Vorzugsweise ist vorgesehen, dass das sich durch thermische Beaufschlagung verformende Verformungs-Element und die Bauteile der Lenksäule zwischen denen die Energieabsorption erfolgt, voneinander verschiedene Teile der Lenksäule sind, wobei die Stärke bzw. der Grad der Energieabsorption mittels des sich durch thermische Beaufschlagung verformenden Verformungs-Elementes, vorzugsweise in zumindest drei voneinander verschiedenen Stufen, besonders bevorzugt in kontinuierlichen Abstufungen, steuerbar ist. In anderen Worten ist somit vorgesehen, dass die Energieabsorption selbst nicht innerhalb des sich durch thermische Beaufschlagung verformenden Verformungs-Elementes erfolgt, sondern dieses Verformungs-Element den Grad der Energieabsorption nur steuert. Es ist somit günstig, wenn das sich durch thermische Beaufschlagung verformende Verformungs-Element durch seine Verformung den Energieabbau an zumindest einem zweiten Teil der Energieabsorptionseinrichtung steuert.

Bei der mittels der Energieabsorptionseinrichtung geschaffenen Verbindung zwischen den beiden relativ zueinander bewegbaren Teilen der Lenksäule handelt es sich zumindest im Falle eines Fahrzeugscrashs nicht um eine starre Verbindung, sondern um eine Verbindung, die durch Bewegen bzw. Verschieben der Bauteile der Lenksäule gegeneinander dazu führt, dass die beim Fahrzeugcrash auftretenden Energien in der gewünschten Art und Weise absorbiert werden. Es ist dabei günstigerweise vorgesehen, dass die Energieabsorptionseinrichtung verschiedene Widerstandskräfte, also zumindest eine erste und eine zweite vordefinierbare Widerstandskraft, zur Absorption der Energie im Crashfall einstellen kann. Besonders bevorzugte Ausgestaltungsformen der Erfindung sehen in diesem Zusammenhang vor, dass die Temperatur des Verformungs-Elementes mittels der Temperaturveränderungsvorrichtung in Abstufungen und/oder kontinuierlich zwischen zumindest zwei, vorzugsweise zwischen zumindest drei, Temperaturwerten veränderbar ist, wobei die Energieabsorptionseinrichtung die mindestens zwei relativ zueinander bewegbaren Bauteile der Lenksäule bei den verschiedenen Temperaturen unterschiedlich fest miteinander verbindet.

Besonders bevorzugte Ausgestaltungsformen der Erfindung sehen vor, dass die relativ zueinander bewegbaren, insbesondere relativ zueinander verschiebbaren, Bauteile der Lenksäule mittels der Energieabsorptionseinrichtung, vorzugsweise ausschließlich, reibschlüssig miteinander verbunden sind. Vorzugsweise ist vorgesehen, dass eine Normalkraft, die auch nur eine Kraftkomponente eines Kraftwertes sein kann, auf die in Reibschluss miteinander verbundenen Bauteile in diesem Fall die Widerstandskraft gegen die Verschiebung der Bauteile gegeneinander bestimmt. In diesem bevorzugten Fall ist die Normalkraft durch Verformung des Verformungs-Elementes veränderbar. Entsprechend ist die Reibkraft im Crashfall durch einen temperaturbedingten Verformungszustand des Verformungs-Elementes einstellbar. Mit Vorzug ist dabei keines der im Reibschluss miteinander verbundenen Bauteile selbst das durch thermische Beaufschlagung verformbare Verformungs-Element.

Der Vollständigkeit halber wird darauf hingewiesen, dass der Begriff der Energieabsorption mit dem Begriff der Vernichtung von Energie gleichgesetzt wird.

Die erfindungsgemäße Lenksäule bzw. Energieabsorptionseinrichtung weist günstigerweise zumindest einen Betriebszustand in Form eines Absorptionszustandes auf, bei dem die relativ zueinander bewegbaren Bauteile zur Absorption von Energie relativ zueinander bewegbar sind. Mittels der erfindungsgemäßen Energieabsorptionseinrichtung können in diesem Absorptionszustand günstigerweise zumindest zwei, vorzugsweise zumindest drei, vorzugsweise vordefinierte, Widerstandskräfte eingestellt werden. Die verschiedenen Widerstandskräfte können abgestuft aber auch kontinuierlich einstellbar sein. Zusätzlich zu diesem Absorptionszustand kann auch vorgesehen sein, dass die erfindungsgemäße Energieabsorptionseinrichtung in einen als Arretierzustand ausgebildeten Betriebszustand gebracht werden kann. In diesem ist die Verbindung der beiden relativ zueinander bewegbaren Teile so stark, dass diese Bauteile aneinander arretiert sind. Es kann aber als alternativer oder zusätzlicher Betriebszustand auch ein Verstellzustand vorgesehen sein, in dem mittels eines relativ zueinander Bewegens der Bauteile die Position eines an der Lenksäule befestigten Lenkrades an einen Fahrer anpassbar ist.

In diesem Zusammenhang kann vorgesehen sein, dass die Energieabsorptionseinrichtung einen ersten Betriebszustand, bei dem sich die Temperatur des Verformungs-Elementes in einem ersten Temperaturbereich befindet, und zumindest einen zweiten Betriebszustand, bei dem sich die Temperatur des Verformungs-Elementes in einem vom ersten Temperaturbereich verschiedenen zweiten Temperaturbereich befindet, und zumindest einen mittleren Betriebszustand, bei dem sich die Temperatur des Verformungs-Elementes in einem mittleren Temperaturbereich zwischen dem ersten Temperaturbereich und dem zweiten Temperaturbereich befindet, aufweist, wobei die Energieabsorptionseinrichtung die relativ zueinander bewegbaren Bauteile der Lenksäule in dem ersten Betriebszustand stärker als in dem mittleren Betriebszustand und im mittleren Betriebszustand stärker als im zweiten Betriebszustand miteinander verbindet und zumindest einer der, vorzugsweise alle, Betriebszustände mittels der Temperaturveränderungsvorrichtung einstellbar ist bzw. sind. Bei dem ersten Betriebszustand kann es sich dabei um den Arretierzustand und beim zweiten Betriebszustand um den Verstellzustand handeln. Der mittlere Betriebszustand kann dann z. B. der Absorptionszustand sein. Günstige Ausgestaltungsformen der Erfindung sehen somit vor, dass die Energieabsorptionseinrichtung zusätzlich auch als Feststelleinrichtung ausgebildet sein kann. Bevorzugt handelt es sich bei erfindungsgemäßen Lenksäulen um so genannte verstellbare Lenksäulen, bei denen eine zur fahrzeugfesten Fixierung am Fahrzeug vorgesehene Konsoleneinheit und eine Lenkspindellagereinheit zur drehbaren Lagerung einer Lenkspindel vorgesehen sind. Die Lenkspindellagereinheit kann dabei im genannten Verstellzustand dem Fahrerwunsch entsprechend in ihrer Position relativ zur Konsoleneinheit einstellbar und im Arretierzustand an dieser arretiert sein.

Es kann vorgesehen sein, dass einer der relativ zueinander bewegbaren Bauteile die zur fahrzeugfesten Fixierung am Fahrzeug vorgesehene Konsoleneinheit und der relativ dazu bewegbare Bauteil die Lenkspindellagereinheit zur drehbaren Lagerung der Lenkspindel ist. Es kann aber auch vorgesehen sein, dass einer der relativ zueinander bewegbaren Bauteile der Lenksäule ein Zwischenbauteil ist, welches zwischen der Konsoleneinheit und der Lenkspindellagereinheit angeordnet ist, wobei der relativ zum Zwischenbauteil bewegbare Bauteil dann die Konsoleneinheit oder die Lenkspindellagereinheit sein kann.

Besonders bevorzugte Ausgestaltungsformen der Erfindung sehen vor, dass die Lenksäule eine Steuereinrichtung zur Ansteuerung der zumindest einen Temperaturveränderungsvorrichtung, vorzugsweise in Abhängigkeit zumindest eines gemessenen Betriebsparameters des Kraftfahrzeugs, aufweist. Mittels der Steuereinrichtung ist es somit möglich, die Widerstandskräfte, also die Festigkeit der Verbindung, mit der die Energieabsorptionseinrichtung die beiden relativ zueinander bewegbaren Bauteile miteinander verbindet, einzustellen. Insbesondere können mit einer solchen Steuereinrichtung die genannten Betriebszustände eingestellt werden. Bei der Steuereinrichtung kann es sich um eine reine Steuerung handeln, mit der vordefinierte Werte eingestellt werden. Günstigerweise handelt es sich aber bei der Steuereinrichtung um eine Regeleinrichtung, bei der die Temperaturveränderungsvorrichtung in Abhängigkeit zumindest eines gemessenen Betriebsparameters des Kraftfahrzeuges angesteuert wird. Verschiedne Betriebsparameter des Kraftfahrzeuges, welche für eine solche Regelung herangezogen werden können, sind weiter unten beispielhaft angeführt. Im Sinne der Erfindung wird der Begriff Steuereinrichtung somit sowohl für reine Steuerungen als auch für Regeleinrichtungen angewendet.

Eine solche Energieabsorptionseinrichtung kann somit über einen Steuerbefehl derart angesteuert werden, dass die Widerstandskraft in einem Bereich zwischen einer unteren Grenzkraft und oberen Grenzkraft einstellbar ist. In Versuchen kann eine Zuordnung zwischen der Verschiebekraft zur Verschiebung der beiden Bauteile der Lenksäule relativ zueinander, also z. B. der Lenkspindellagereinheit gegenüber der karosseriefesten Konsoleneinheit, und dem Betriebszustand der Energieabsorptionseinrichtung bzw. der von ihr aufgebrachten Widerstandskräfte und die damit verbundene Größe beziehungsweise dem Wert des Steuersignal, der im einfachsten Fall ein Stromwert ist, ermittelt werden. Auf dieses Weise wird es möglich, die Energieabsorptionseinrichtung als System zur Energieabsorption im Crashfall einzusetzen und den Wert der Energieabsorption durch die Höhe des Kraftniveaus, das mit einer Größe des Steuersignals korrespondiert, festzulegen.

Bevorzugt ist das Verformungs-Element derart thermisch beaufschlagbar, dass die Energieabsorptionseinrichtung im Absorptionszustand zumindest eine Widerstandskraft, bevorzugt mehrere Widerstandskräfte, besonders bevorzugt kontinuierlich eine beliebige Anzahl von verschiedenen Widerstandskräften erzeugt, derart, dass die relativ zueinander bewegbaren Bauteile mit vordefinierbaren Widerstandskräften gegeneinander verschiebbar sind.

Auf diese Weise wird es ermöglicht, die Energieabsorption auch während des Fahrzeugcrashes genau auf die jeweils vorliegenden Bedingungen anzupassen.

Bei der Temperaturveränderungsvorrichtung handelt es sich bevorzugt um eine oder mehrere aktive Temperaturveränderungsvorrichtungen. Solche aktiven Temperaturveränderungsvorrichtungen nutzen nicht die Umgebungstemperatur sondern wandeln eine Energieform wie z. B. elektrischen Strom in Wärme bzw. Kälte um. Besonders bevorzugt ist in diesem Zusammenhang vorgesehen, dass mindestens eine der Temperaturveränderungsvorrichtungen elektrisch ansteuerbar ist. Besonders bevorzugt handelt es sich bei der Temperaturveränderungsvorrichtung um eine reine Heizeinrichtung. Es ist jedoch denkbar und möglich, sowohl eine Heiz- als auch eine Kühlvorrichtung vorzusehen. Mögliche Ausgestaltungsformen der Erfindung sehen sogar vor, dass die Energieabsorptionseinrichtung als Temperaturveränderungsvorrichtungen zumindest eine Heizeinrichtung zum Aufheizen des Verformungs-Elementes und zumindest eine Kühleinrichtung zum Abkühlen des Verformungs-Elementes aufweist. Ein Grundgedanke dabei ist es, dass die Energieabsorptionseinrichtung mittels der Temperaturveränderungsvorrichtung die Temperatur und damit auch die Form des Verformungs-Elementes ändert, um dadurch die Festigkeit, mit der die Energieabsorptionseinrichtung die beiden relativ zueinander bewegbaren Bauteile der Lenksäule miteinander verbindet, und damit die von der Energieabsorptionseinrichtung im Falle des Fahrzeugcrashes zur Absorption der Energie aufgebrachten Widerstandskräfte einzustellen. Hierzu genügt es, die entsprechend korrespondierenden Temperaturwerte einzustellen. Damit dies im Crashfall auch während der Verschiebung der Lenkspindellagereinheit gegenüber der Konsoleneinheit ermöglicht ist, soll diese Temperaturveränderung möglichst schnell einstellbar sein.

In einer bevorzugten Ausführungsform wird das Verformungs-Element zumindest teilweise bzw. bereichsweise durch einen Draht oder Streifen oder ein Band gebildet.

Im Rahmen der Erfindung können Verformungs-Elemente vorgesehen sein, die entweder bei einer höheren Temperatur ein größeres Volumen oder zumindest in einer Richtung eine größere Erstreckung aufweisen als bei einer niedrigeren Temperatur. Es können alternativ aber auch Verformungs-Elemente vorgesehen sein, die bei einer höheren Temperatur ein kleineres Volumen oder zumindest in einer Richtung eine kleinere Erstreckung aufweisen als bei einer niedrigeren Temperatur. Im Falle der Ausbildung des Verformungs-Elements als Draht oder Band bzw. Streifen ist die Erfindung umsetzbar mit Verformungs-Elementen, die entweder bei einer höheren Temperatur eine größere Länge aufweisen als bei einer niedrigeren Temperatur oder die bei einer höheren Temperatur ein geringere Länge aufweisen als bei einer niedrigeren Temperatur.

Bevorzugte Ausgestaltungsformen der Erfindung sehen vor, dass die Lenksäule, vorzugsweise die Energieabsorptionseinrichtung, zumindest ein, vorzugsweise elastisches, Rückstellelement aufweist, welches einer durch thermische Beaufschlagung hervorgerufenen Verformung des Verformungs-Elementes entgegen wirkt. Bei solchen Ausgestaltungsformen der Erfindung ist dann günstigerweise vorgesehen, dass durch thermische Verformung des Verformungs-Elementes die Energieabsorptionseinrichtung kontinuierlich die Festigkeit der Verbindung der beiden relativ zueinander bewegbaren Bauteile der Lenksäule innerhalb des Absorptionszustandes und/oder vom Arretierzustand über den Absorptionszustand in den Verstellzustand verändert wird und das Rückstellelement die gegenläufige Verstellung durchführt.

Natürlich ist auch die umgekehrte Vorgehensweise möglich. Das Rückstellelement ist bei bevorzugten Ausgestaltungsformen direkt in die Energieabsorptionseinrichtung integriert. Es kann aber auch vorgesehen sein, dass in anderen Teilen der Lenksäule bereits vorhandene, vorzugsweise elastische, Rückstellkräfte, welche nicht direkt der Energieabsorptionseinrichtung an sich zuzuordnen sind, als Rückstellelement genutzt werden.

Die thermische Verformung des sich unter thermischer Beaufschlagung verformenden Verformungs-Elementes kann sowohl durch Heizen als auch durch Kühlen hervorgerufen werden. Weiters ist darauf hinzuweisen, dass es Ausführungsbeispiele der Erfindung gibt, bei denen durch die thermische Umformung ein Zusammenziehen bzw. Verkürzen des thermisch verformbaren Elementes hervorgerufen wird. Genau so gut ist es möglich, mittels der Temperaturveränderungsvorrichtung ein Ausdehnen bzw. Verlängern des Verformungs-Elementes herbeizuführen. Die thermischen Eigenschaften bei der Verformung und die eingesetzten Temperaturdifferenzen sind jedenfalls günstigerweise immer so aufeinander abzustimmen, dass der gewünschte Stellvorgang in der Energieabsorptionseinrichtung erreicht wird.

Besonders bevorzugte Ausgestaltungsformen der Erfindung sehen vor, dass das sich unter thermischer Beaufschlagung verformende Verformungs-Element eine Formgedächtnislegierung aufweist oder daraus besteht. Formgedächtnislegierungen sind beim Stand der Technik an sich bekannt. Es handelt sich in der Regel um Metalllegierungen. Für den erfindungsgemäßen Einsatz bieten sich z.B. Nickel-Titan-Niob-Legierungen oder Nickel-Titan-Legierungen an. Bei Formgedächtnislegierungen tritt beim Überschreiten bzw. Unterschreiten einer gewissen Grenztemperatur im Kristallgitter der Formgedächtnislegierung ein Phasenübergang von Austenit zu Martensit ein, welcher zu einer Umformung führt. Dieser Vorgang ist reversibel, sodass beim gegenläufigen Über- bzw. Unterschreiten der Grenztemperatur oder evtl. auch einer anderen Grenztemperatur die Formgedächtnislegierung und damit das thermisch verformbare Element, gegebenenfalls mittels Hilfestellung des Rückstellelementes, wieder in seine ursprüngliche Form zurückfindet. Der Phasenübergang und die damit einhergehende Verformung tritt allerdings nicht schlagartig ein, sondern es gibt einen Übergangsbereich zwischen einer untere Grenztemperatur Tmin und eine obere Grenztemperatur Tmax, indem der wesentliche Teil, sicher mehr als 90%, der Verformung zwischen den beiden Formzuständen erfolgt. Dieser mittlere Temperaturbereich ist geeignet zur Einstellung der gewünschten Zwischenstellungen im Absorptionszustand. Die Grenztemperatur Tmin und Tmax stellen günstigerweise die Grenzen zwischen dem eingangs genannten ersten Temperaturbereich und dem mittleren Temperaturbereich sowie zwischen dem mittleren Temperaturbereich und dem zweiten Temperaturbereich dar.

Um den Stellvorgang möglichst schnell durchführen zu können, sehen bevorzugte Ausgestaltungsformen, wie bereits erwähnt, als Temperaturveränderungsvorrichtungen sowohl eine Heizeinrichtung als auch eine Kühleinrichtung vor. Es kann sich bei der Kühleinrichtung sowohl um eine aktive Kühleinrichtung wie z.B. ein Gebläse bzw. Lüfter, aber auch um eine passive Kühleinrichtung wie z.B. eine Kühlrippe handeln. Als passive Kühleinrichtung kann auch ein ausreichend großer Freiraum um das thermisch verformbare Element herum angesehen werden, welcher einen Hitzestau im Umfeld des Verformungs-Elementes verhindert und damit eine rasche Abführung der Wärme beim Abkühlen des Verformungs-Elementes erlaubt. In diesem Sinne ist es günstig, wenn im Falle des Einsatzes eines Drahtes oder Bandes bzw. Streifens als Verformungs-Element als Mindestabstand zwischen dem Verformungs-Element und einem benachbarten Bauteil zumindest das 2fache, vorzugsweise zumindest das 5fache, des Durchmessers bzw. der Dicke des Verformungs-Elementes vorgesehen ist.

Besonders zu bevorzugen ist eine rein elektrische Ansteuerung der Temperaturveränderungsvorrichtung bzw. Energieabsorptionseinrichtung. Dabei wird im einfachsten Fall ein Strom durch das Verformungs-Element geleitet, das sich durch den Stromfluss selbst erwärmt und somit eine Temperatur in einem höheren Temperaturbereich einnimmt. Bei Abschalten des Stromflusses kühlt sich das Verformungs-Element wieder auf die Umgebungstemperatur und damit auf eine Temperatur in einem niedrigeren Temperaturbereich ab. Zum Aufbau des Stromflusses kann sowohl eine Gleichstromquelle als auch eine Wechselstromquelle eingesetzt sein. AIternativ zur Stromquelle ist es auch denkbar eine Induktionsquelle zu verwenden, um das thermisch verformbare Element mittels Stromfluss aufzuheizen. Natürlich können alternativ hierzu auch andere, insbesondere elektrische, Heizeinrichtungen verwendet werden, insbesondere solche, welche durch eine Steuereinrichtung ansteuerbar sind.

Neben einer elektrisch betriebenen Heizeinrichtung, wie sie beispielsweise oben genannt ist, kann auch eine elektrisch betriebene Kühleinrichtung oder auch beides in der Energieabsorptionseinrichtung eingesetzt sein. Günstig ist es dabei, wenn sich die Energieabsorptionseinrichtung im stromlosen bzw. ausgeschalteten Zustand der Temperaturveränderungsvorrichtung(en) in dem Zustand bzw. Betriebszustand befindet, der mit der jeweils für die meisten Fälle optimierten Widerstandskraft korrespondiert. Dies hat den Vorteil, dass nur dann Strom gebraucht wird, wenn andere Widerstandskräfte benötigt werden. Dies spart zum einen Strom, zum anderen erhöht es aber auch die Betriebssicherheit der Lenksäule, da es nicht durch unerwarteten Stromausfall zu einem ungewollten Überführen der Energieabsorptionseinrichtung in einen ungewollten Zustand bzw. Betriebszustand kommen kann. Wird der Crashfall festgestellt, so wird, vorzugsweise durch die Steuereinrichtung eine Temperatur eingestellt, durch die das Verformungselement auf einen Verformungszustand eingestellt wird, mit dem die jeweils geforderte(n) Widerstandskraft (-kräfte) gegen die Bewegung der Bauteile relativ zueinander, insbesondere die Verschiebung der Lenkspindellagereinheit gegenüber der Konsoleneinheit, durch die Energieabsorptionseinrichtung eingestellt ist (sind). Im Falle des Einsatzes eines Drahtes oder Bandes als Verformungselement, dessen Temperatur durch den Stromfluss durch den Draht eingestellt wird, werden im Crashfall entsprechende Stromwerte eingestellt.

Im Folgenden werden beispielhaft verschiedene gemessene Betriebsparamter des Kraftfahrzeuges genannt, in deren Abhängigkeit die Steuereinrichtung die Temperaturveränderungsvorrichtung(en) ansteuern kann.

Der Crashfall kann z. B. durch entsprechende Sensoren im Kraftfahrzeug festgestellt, die auch zur Auslösung des Airbags dienen. Hierzu kann an die Steuereinrichtung ein Crash-Signal übertragen werden. Insbesondere ist es denkbar und möglich, die Steuereinrichtung mit dem Airbagsteuergerät zu verbinden oder sogar zu kombinieren bzw. das Airbagsteuergerät als Steuereinrichtung zu verwenden.

Es ist auch möglich, die Energieabsorption im Fall eines Fahrzeugcrashes an die jeweiligen Fahrbedingungen und/oder gemessene Daten des Fahrers anzupassen. Insbesondere ist es möglich durch Sensoren im Sitz das Gewicht des Fahrers festzustellen und/oder festzustellen, ob der Fahrer angegurtet ist oder nicht. Es kann gegebenenfalls zusätzlich auch die Fahrzeuggeschwindigkeit ermittelt werden. Auf Basis dieser Messwerte können im Falle eines Fahrzeugcrashes entsprechende, vorzugsweise vordefinierte, Widerstandskräfte mittels der Energieabsorptionseinrichtung eingestellt werden. Durch entsprechende Versuche und Auslegungen, wie sie im Entwicklungsprozess für die Lenksäule und das Fahrzeug üblich sind, wird die Korrelation zwischen den Stromwerten und den Widerstandskräften bestimmt. Auf Basis dieser Voruntersuchungen können z. B. in einem Speicher der Steuereinrichtung für verschiedene Parameterbereiche, der Fahrzeuggeschwindigkeit und/oder des Gewichts des Fahrers und/oder des Zustandes angeschnallt oder nicht und/oder auch weiterer Parameter, entsprechende Vorgabewerte abgelegt werden, die im Fall des Crashs eingestellt werden. Auf diese Weise ermöglicht die Energieabsorptionseinrichtung ein optimal angepasstes Crashverhalten.

Besonders bevorzugte Ausgestaltungsformen der Erfindung sehen, wie bereits dargelegt, vor, dass das Verformungs-Element bzw. die Verformungs-Elemente zumindest bereichsweise als Draht oder Band ausgebildet sind. Hierdurch werden relativ dünne Verformungs-Elemente geschaffen, welche im Sinn einer hohen Schaltgeschwindigkeit schnell abkühlen. In diesem Sinne ist es günstig, wenn die Dicke des Drahtes oder des Bandes bzw. Streifens maximal 1 mm, vorzugsweise maximal 3mm beträgt. Drähte mit Durchmessern von weniger als 1 mm und mehr als 0,1 mm haben sich in Versuchen als besonders vorteilhaft erwiesen. Als Dicke des Drahtes bzw. Bandes bzw. Streifens wird jeweils der kleinste Durchmesser angesehen. Bevorzugte Ausgestaltungsformen sehen dabei vor, dass das Verformungs-Element zumindest bereichsweise als Draht oder Band ausgebildet ist und dessen Länge sich durch die Einstellung von verschiedenen Temperaturen des Verformungs-Elementes unter Verwendung der Temperaturveränderungsvorrichtung um zumindest 3%, vorzugsweise um zumindest 4%, verändert.

Beim Betrieb eines Kraftfahrzeugs treten insbesondere in dessen Innenraum Raumtemperaturen im Bereich zwischen -40°C und +80°C auf. Damit es zu keinen Fehlern kommt, ist vor diesem Hintergrund günstigerweise vorgesehen, die Grenztemperaturen bzw. Temperaturbereiche der Betriebszustände unter Berücksichtigung dieser Raumtemperatur festzulegen. Insbesondere sollte, die Temperatur des Verformungs- Elements im eingangs genannten ersten Temperaturbereich unterhalb einer unteren Grenztemperatur Tmin liegen, die mindestens 80°C, vorzugsweise jedoch eine etwas höhere Temperatur z. B. wie 90°C oder sogar 100°C, beträgt. Der eingangs genannte zweite Temperaturbereich sollte vorzugsweise über einer oberen Grenztemperatur Tmax liegen, die mindestens 130°C, weiter bevorzugt mindestens 170°C, beträgt, um die Einstellmöglichkeiten des Systems voll im Crashfall zur Verfügung zu haben. Es kann natürlich auf die Ausschöpfung des vollständigen Kraftbereiches verzichtet werden.

In einer bevorzugten Ausgestaltungsform ist vorgesehen, dass mehrere Drähte, Bänder oder Streifen parallel angeordnet sind, um in einer kompakten Bauform hohe Verformungskräfte bereitzustellen, mit denen der entsprechende Schaltvorgang ausgeführt werden kann. Alternativ kann es vorgesehen sein, dass der Draht oder das Band bzw. der Streifen, vorzugsweise mehrfach, umgelenkt ist. Die jeweilige Umlenkung erfolgt bevorzugt über Umlenkstellen, die bevorzugt gerundet ausgebildet oder durch Rollen gebildet sind. Gegebenenfalls zusätzlich können auch reibungsarme Oberflächen eingesetzt werden. Eine derartige Ausgestaltungsform besitzt den Vorteil, dass hohe Schaltwege dargestellt werden können.

Besonders bevorzugte Ausgestaltungsformen der Erfindung sehen vor, dass die Energieabsorptionseinrichtung eine Spanneinrichtung mit einem trommelartigen Aufbau in Form einer Spanntrommel aufweist. Es kann z.B. vorgesehen sein, dass, vorzugsweise draht- oder band- bzw. streifenartig ausgebildete VerformungsElemente oder zumindest ein solches Verformungs-Element zwischen zwei Platten gespannt sind bzw. ist. Zwischen diesen Platten kann zusätzlich auch das vorzugsweise elastische Rückstellelement wirken und/oder angeordnet sein. Als elastisches Rückstellelement sind z.B. Federn, insbesondere Schrauben-, Blattfedern oder Tellerfedern, verwendbar.

Falls die Einbringung geeigneter Umlenkstellen zu aufwändig ist, kann der Draht in der Spanntrommel nur jeweils einfach zwischen den beiden Platten verlaufen bzw. gespannt sein. Allerdings muss dann jeder Draht einzeln kontaktiert und geschaltet werden. Das kann dann beispielsweise über die beiden Platten für alle Drähte gemeinsam erfolgen. Das Gleiche gilt auch für band- oder streifenförmige Verformungs-Elemente.

Ein eigenständiger Aspekt der Erfindung betrifft eine Spanneinrichtung, insbesondere für eine Energieabsorptionseinrichtung einer Lenksäule der geschilderten Art, welche dadurch gekennzeichnet ist, dass die Spanneinrichtung zumindest zwei Platten sowie zumindest ein, zumindest bereichsweise als Draht oder Band ausgeführtes und sich durch thermische Beaufschlagung verformendes Verformungs-Element, vorzugsweise aus oder mit einer Formgedächtnislegierung, sowie zumindest ein, vorzugsweise elastisches, Rückstellelement aufweist, wobei die Platten mittels des Verformungs-Elements, vorzugsweise voneinander beabstandet, miteinander verbunden sind und das Rückstellelement zumindest teilweise, vorzugsweise zumindest in einer Richtung, einer durch thermische Beaufschlagung des Verformungs-Elements hervorgerufenen Kraft auf die Platten entgegen wirkt.

Das Rückstellelement muss dabei der durch thermische Beaufschlagung des Verformungs-Elements hervorgerufenen Kraft auf die Platten nicht zwingend permanent bzw. in allen Richtungen entgegen wirken. Es reicht bei bevorzugten Varianten aus, wenn es im Sinne einer Rückstellung nur teilweise also z.B. nur in einer Richtung dieser Kraft auf die Platten entgegen wirkt.

Zwischen den Platten kann ein einziges, als Draht oder Band ausgeführtes Verformungs-Element, vorzugszweise mehrfach umgelenkt, angeordnet sein. Zwischen den Platten können aber auch mehrere draht- oder bandartige Verformungs-Elemente, gegebenenfalls mehrfach umgelenkt, angeordnet sein. Das Rückstellelement wirkt günstigerweise einer durch thermische Beaufschlagung hervorgerufenen Verformung des Verformungs-Elements entgegen. Vorzugsweise sorgt das Rückstellelement für eine Vorspannung der Platten, welche die Platten auseinanderdrückt und das oder die Verformungs-Element(e) zwischen den Platten spannt. Das Verformung-Element weist günstigerweise zumindest eine oder zwei Kontaktstellen auf, über die es mit einer Stromquelle kontaktierbar ist. Durch Beheizen und/oder Kühlen, also durch thermisches Beaufschlagen kann die Form und insbesondere die Länge des Verformungs-Elementes geändert werden. Hierdurch wird auch der Abstand der Platten zueinander verändert. Beim Rückstellelement kann es sich beispielsweise um Schrauben- oder Tellerfedern oder sonstige elastische Körper handeln. Besonders bevorzugt ist vorgesehen, dass das Verformungs-Element oder die Verformungs-Elemente aus zumindest einer Formgedächtnislegierung bestehen bzw. eine solche zumindest aufweisen. Günstige Ausgestaltungsformen der Spanneinrichtung sind trommelartig ausgebildet, sodass im Folgenden in den Ausführungsbeispielen auch von einer Spanntrommel die Rede ist.

Zur Führung, insbesondere einer Bewegung, der Platten können Führungselemente vorgesehen sein. Bevorzugte Ausgestaltungsformen sehen hierzu vor, dass zumindest ein Bolzen die Platten durchsetzt und die Platten durch Verformung des oder der Verformungselemente in Längsrichtung des Bolzens verschoben werden bzw. ihren Abstand ändern. Das Rückstellelement wirkt dabei günstigerweise der thermisch hervorgerufenen Verformung des Verformungselementes bzw. einer entsprechenden Bewegung der Platten in zumindest einer Richtung entgegen. Insbesondere zum Heizen des Verformungselementes kann vorgesehen sein, dass dieses direkt über die genannten Kontaktstellen mit einer Stromquelle kontaktierbar ist, sodass ein Stromfluss durch das Verformungselement ein Beheizen desselben bewirkt. Zur Umlenkung des draht- oder bandartigen Verformungselementes in den Platten können in oder an den Platten Rollen und/oder, vorzugsweise gerundete, Umlenkstellen vorgesehen sein. Weiters kann die Spanneinrichtung alle im Zusammenhang mit der erfindungsgemäßen Lenksäule und insbesondere in den Ausführungsbeispielen geschilderten Merkmale, einzeln oder in Kombination aufweisen.

Besonders bevorzugt ist eine Spanneinrichtung, insbesondere für eine Lenksäule der genannten Art, vorgesehen, welche einen Befestigungsbolzen, ein Federelement und zwei voneinander beabstandete Platten umfasst, wobei die Platten vom Befestigungsbolzen durchsetzt sind und vom Rückstellelement bzw. Federelement in Längsrichtung des Befestigungsbolzens unter Vorspannung auf einen Abstand voneinander gehalten sind, wobei das Spannstück einen oder mehrere Drähte aufweist, die an den beiden Platten befestigt sind, derart dass sie den Abstand der Platten zueinander gegen die Vorspannung begrenzen, wobei der Draht oder die Drähte aus einer Formgedächtnislegierung bestehen und elektrisch mit einer schaltbaren Stromquelle kontaktierbar ist bzw. sind.

Ein erfindungsgemäßes Verfahren zum Betrieb einer Lenksäule der genannten Art ist dadurch gekennzeichnet, dass im Falle eines Fahrzeugcrashes mindestens zwei relativ zueinander bewegbare, insbesondere relativ zueinander verschiebbare, Bauteile der Lenksäule relativ zueinander bewegt werden, wobei die Energieabsorptionseinrichtung die Bauteile zur Absorption der Energie miteinander verbindet.

Weitere Merkmale und Einzelheiten bevorzugter Ausgestaltungsformen der Erfindung werden anhand der beigelegten Figuren erläutert. Es zeigen:
Fig. 1 ein erstes Ausführungsbeispiel der Erfindung;
Fig. 2 Darstellung einer Spanneinrichtung der Energieabsorptionseinrichtung ausgeführt als Spanntrommel;
Fig. 2a, 2b Detailschnitte zur Darstellung möglicher Umlenkungen des drahtartigen Verformungselements;
Fig. 3 Garstellung des ersten Ausführungsbeispiels der Erfindung im Querschnitt in einem ersten Betriebszustand;
Fig. 4 Darstellung des ersten Ausführungsbeispiels der Erfindung im Querschnitt in einem zweiten Betriebszustand;
Fig. 5 ein zweites Ausführungsbeispiel der Erfindung;
Fig. 6 Darstellung des zweiten Ausführungsbeispiels der Erfindung im Querschnitt in einem zweiten Betriebszustand;
Fig. 7 Darstellung des zweiten Ausführungsbeispiels der Erfindung im Querschnitt in einem ersten Betriebszustand;
Fig. 8 eine Variante zum zweiten Ausführungsbeispiel der Erfindung;
Fig. 9 einen Querschnitt durch ein drittes Ausführungsbeispiel der Erfindung in einem ersten Betriebszustand;
Fig.10 einen Querschnitt durch das dritte Ausführungsbeispiel der Erfindung in einem zweiten Betriebszustand;
Fig. 11 eine Darstellung eines vierten Ausführungsbeispiels der Erfindung im Querschnitt in einem ersten Betriebszustand;
Fig.12 eine Darstellung des vierten Ausführungsbeispiels der Erfindung im Querschnitt in einem zweiten Betriebszustand;
Fig. 13 eine Darstellung eines Längenverlaufes für das Verformungs-Element, dass als Draht ausgebildet ist, in Abhängigkeit von der Temperatur des Verformungs-Elementes;
Fig. 14 Darstellung der Temperatur des Verformungs-Elements als Funktion des Stroms, der durch das Verformungselement fließt;
Fig. 15 Darstellung der von der Energieabsorptionseinrichtung aufgebrachten Widerstandskraft als Funktion des Stromflusses durch das Verformungs-Element.

Gleichartige oder gleichwirkende Elemente werden, wie auch in den weiteren Figur mit denselben Bezugszeichen bezeichnet.

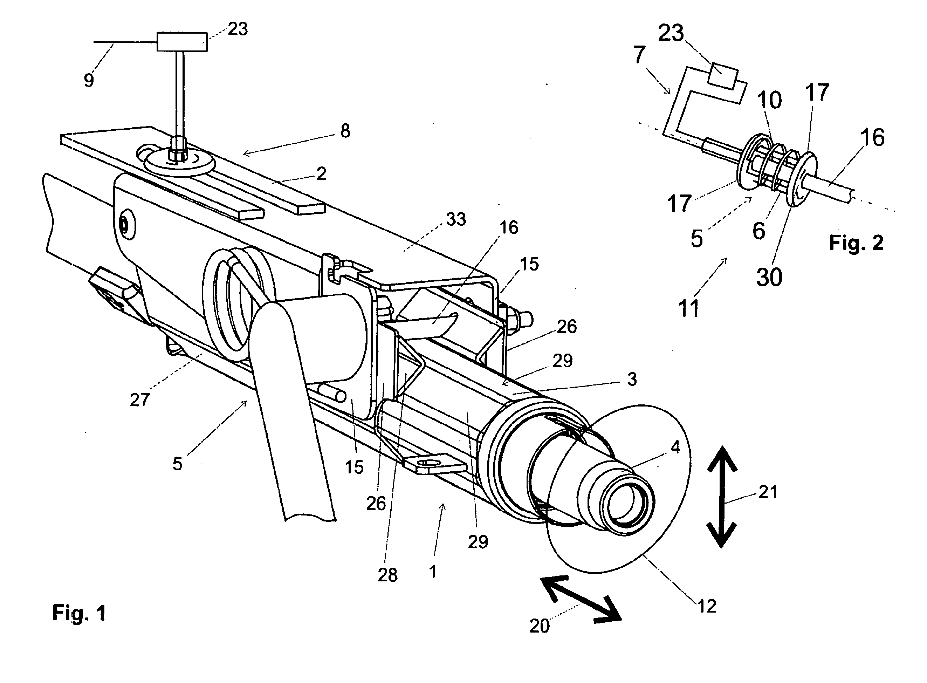

In den Figuren 1, 3 und 4 ist ein erstes Ausführungsbeispiel der Erfindung veranschaulicht. Bei diesem wirkt eine erfindungsgemäße Energieabsorptionseinrichtung 8 zwischen der zur fahrzeugfesten Fixierung am Kraftfahrzeug vorgesehenen Konsoleneinheit 2 und dem Zwischenbauteil 33, welches wiederum die Lenkspindellagereinheit 3 zur drehbaren Lagerung der Lenkspindel 4 trägt. Im gezeigten Ausführungsbeispiel sind die erfindungsgemäße Energieabsorptionseinrichtung 8, welche zur Absorption von Energie im Crashfall dient, und die Feststelleinrichtung 5, welche zum Einstellen der gewünschten Position des im Bereich 12 an der Lenkspindel 4 befestigten Lenkrades dient, als voneinander getrennte Einrichtungen ausgebildet.

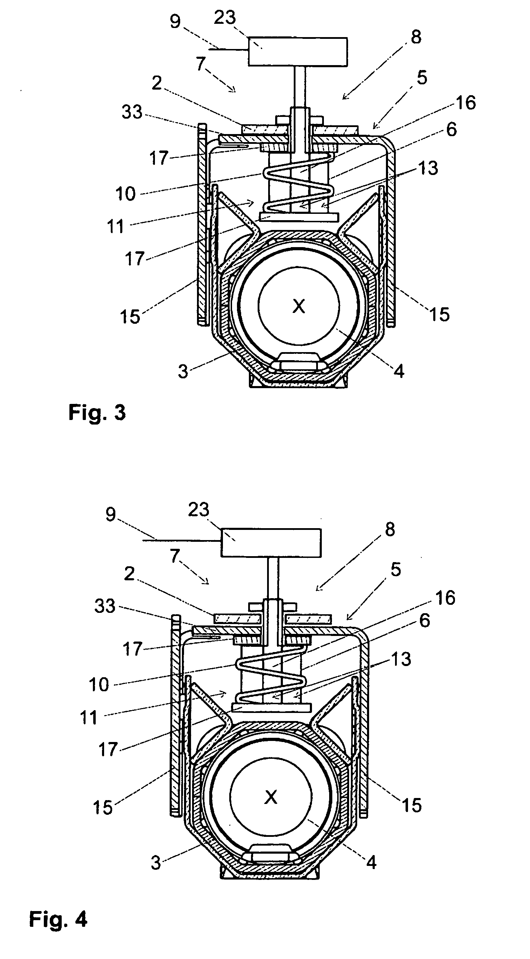

Fig. 1 zeigt eine perspektivische Darstellung der Lenksäule 1. Die Fig. 3 und 4 zeigen einen Vertikalschnitt im Bereich der Energieabsorptionseinrichtung 8. Der Grundaufbau der Lenksäule 1 ähnelt einem von vielen beim Stand der Technik an sich bekannten Beispielen, wie eine solche verstellbare Lenksäule ausgebildet sein kann. Auch im gezeigten Beispiel ist die Lenkspindel 4, an der das Lenkrad im Bereich 12 befestigt wird, drehbar in der Lenkspindellagereinheit 3 gehalten. Die Lenkspindellagereinheit 3 ist gemeinsam mit der Lenkspindel 4 relativ zur Konsoleneinheit 2 verstellbar, wenn die an sich bekannte Feststelleinrichtung 5 sich in der geöffneten Stellung befindet. Im ersten Ausführungsbeispiel ist sowohl eine Verstellung parallel zur Längsrichtung 20 der Lenkspindel 4, also eine Längenverstellung, als auch eine Verstellung in einer Richtung 21 orthogonal zur Längsrichtung der Lenkspindel 4, also eine Höhenverstellung, vorgesehen. Hierzu ist die Lenkspindellagereinheit 3 des gezeigten Beispiels, wie an sich bekannt, zwischen Seitenwangen 15 des Zwischenteils 33 gelagert. Durch entsprechende Langlöcher oder dergleichen, wie sie beim Stand der Technik bekannt sind, sind die genannten Verstellrichtungen in Längsrichtung 20 und Höhenrichtung 21 realisierbar. In der Schließstellung hält die Feststelleinrichtung 5 die Lenkspindellagereinheit 3 in ihrer Lage relativ zum Zwischenbauteil 33 und damit zur fahrzeugfesten Konsoleneinheit 2 fixiert. Die Fixierung erfolgt dabei über eine reibschlüssige oder formschlüssige Verbindung. Im Falle der reibschlüssigen Fixierung erfolgt die Verbindung zwischen den Seitenwangen 15 des Zwischenbauteils 33 und Seitenflächen 26 eines Schwenkhebels 27 und zwischen Seitenflächen 28 des hier zusätzlich zwischengeschalteten Schwenkhebels 27 und Seitenflächen 29 der Lenkspindellagereinheit 3. Im Falle einer formschlüssigen Fixierung erfolgt die Verbindung üblicherweise über hier nicht dargestellte Verzahnungen, die in Eingriff gebracht werden. Erreicht wird die Fixierung mittels der Feststelleinrichtung 5 über beim Stand der Technik an sich bekannte Mittel. In der Öffnungsstellung der Feststelleinrichtung 5 kann die gewünschte Verstellung der Lenkspindellagereinheit 3 relativ zum Zwischenbauteil 33 und damit relativ zur fahrzeugfesten Konsoleneinheit 2 vorgenommen werden. Anschließend wird durch Überführen der Feststelleinrichtung in die Schließstellung die Lage der Lenkspindellagereinheit 3 relativ zum Zwischenbauteil 33 bzw. zur Konsoleneinheit 2 wieder fixiert. Die Schließstellung sollte zumindest dann eingestellt sein, wenn das Fahrzeug bewegt wird. Die Konsoleneinheit 2 kann durch entsprechende Laschen (hier nicht weiter dargestellt), wie sie beim Stand der Technik bekannt sind, am Kraftfahrzeug montiert und damit fixiert werden.

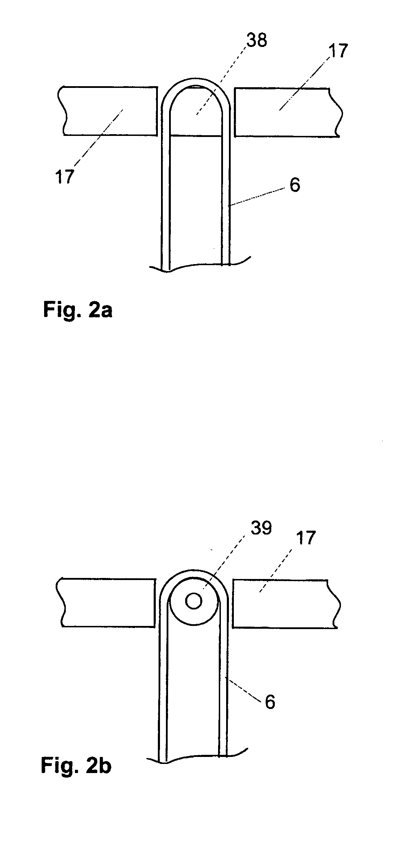

Der Antrieb der Energieabsorptionseinrichtung 8 ist in den Ausführungsbeispielen als trommelartige Spanneinrichtung 11 bzw. als Spanntrommel ausgebildet (vgl. Fig. 2). Er weist zwei einander gegenüberliegend angeordnete Platten 17 auf. Zwischen diesen Platten 17 verläuft das in den Ausführungsbeispielen als Draht ausgebildete, mehrfach umgelenkte, Verformungs-Element 6. Im gezeigten Ausführungsbeispiel besteht das Verformungs-Element 6 aus einer Formgedächtnislegierung, welche als Draht ausgebildet ist und sich durch Erhitzen verkürzt bzw. zusammenzieht. Insbesondere bei einer Mehrfachumlenkung des Verformungselementes 6 in den Platten 17 kann es günstig sein, wenn das Verformungselement 6 über, vorzugsweise gerundete, Umlenkstellen umgelenkt wird. Dies ist in einem Detailschnitt durch eine der Platten 17 in Fig. 2a gezeigt. Die gerundete Umlenkstelle 38 verringert den Reibungswiderstand. Alternativ kann in der Platte zur Umlenkung auch eine drehbar gelagerte Rolle 39 vorgesehen sein, wie dies beispielhaft in Fig. 2b dargestellt ist. Zur weiteren Herabsetzung der Reibung können die Umlenkstellen oder Rollen auch mit einer Gleitbeschichtung beschichtet sein. Zusätzlich ist zwischen den Platten 17 auch ein hier als Schraubenfeder ausgebildetes elastisches Rückstellelement 10 angeordnet. Die beiden Platten 17 werden mittels des Verformungs-Elementes 6 aufeinander zu bewegt, wenn das Verformungs-Element 6 entsprechend beheizt wird. Der Abstand der Platten 17 zueinander wird somit verkürzt. Damit wird bei entsprechender Beheizung der Betriebszustand mit der minimal einstellbaren Widerstandskraft dargestellt. Das Rückstellelement 10 wirkt dieser Verkürzung entgegen und drückt die Platten 17 wieder parallel zur Längsrichtung des Spannbolzens 16 auseinander, wenn der Draht bzw. das Verformungs-Element 6 wieder entsprechend abgekühlt ist bzw. wurde, womit bei entsprechender Abkühlung wieder der Betriebszustand erreicht wird, bei der die maximal einstellbare Widerstandskraft dargestellt ist.

Alternativ zur mehrfachen Umlenkung des drahtartig ausgebildeten Verformungselementes 6 können zwischen den beiden Platten mehrere drahtartige Verformungselemente 6 parallel angeordnet sein. Diese drahtartigen Verformungselemente 6 sind jeweils mit einem Ende an der einen Platte 17 und mit dem anderen Ende an der anderen Platte 17 befestigt. Auf diese Weise wird es möglich höhere Kraftniveaus der Spanneinrichtung darzustellen. Derselbe Effekt ist auch durch eine mehrfache Umlenkung des drahtartigen Verformungselementes 6 möglich, wobei jedoch der Draht in den Umlenkungspunkten so fixiert ist, dass er nicht verschiebbar gegenüber den Platten 17 angeordnet ist. Wie dies weiter unten anhand der Fig. 2a und 2b erläutert wird.

Die Spanntrommel 11 kann mit einem Befestigungsbolzen an einer geeigneten Stelle positioniert werden und über die Seitenfläche 30 eine Spannkraft (oder auch Normalkraft) auf entsprechend angeordnete Flächenabschnitte bewirken. Durch die Ansteuerung kann diese Spannkraft und eine entsprechend wirkende Reibkraft im Falle einer Verschiebung variiert werden.

Die Erhitzung des Verformungs-Elementes bzw. Drahtes 6 erfolgt in diesem Ausführungsbeispiel, indem mittels der Steuereinrichtung 23 der Draht des VerformungsElementes 6 bestromt, also mit elektrischem Stromfluss beaufschlagt wird. Durch die Wahl des entsprechenden Stromwertes kann eingestellt werden, wie stark sich die Drähte des Verformungs-Elementes 6 zusammenziehen. Dies bewirkt eine exakte Einstellung der gewünschten Widerstandskräfte, mit denen die Energieabsorptionseinrichtung 8 die beiden relativ zueinander bewegbaren Bauteile, hier die Konsoleneinheit 2 und das Zwischenbauteil 33, aneinander befestigt. Im Normalbetrieb kann vorgesehen sein, dass sich die Energieabsorptionseinrichtung 8 im Arretierungszustand befindet, in dem die Platten 17 nicht durch Verkürzung des Verformungselementes 6 aufeinander zu gezogen sind und das Rückstellelement 10 seine maximale Anpresskraft entfalten kann, welche die Konsoleneinheit 2 an dem Zwischenbauteil 33 fixiert. Günstigerweise entspricht dieser Arretierungszustand dem Zustand, in dem die Temperaturveränderungsvorrichtung 7 ausgeschaltet, also die Verformungs-Elemente 6 nicht bestromt sind. Alternativ hierzu kann aber auch im Normalbetrieb bereits ein Absorptionszustand eingestellt werden. Dies kann z.B. dadurch erreicht werden, indem bereits ein gewisser Stromdurchfluss durch das Verformungs-Element 6 und damit dessen Erwärmung auf einen gewünschten Temperaturwert mittels der Steuereinrichtung 23 eingestellt wird. Alternativ kann dies auch stromlos durch ein entsprechend schwächeres Rückstellelement 10 oder eine entsprechende Dimensionierung der Abstände und Längen der Spanneinrichtungen, beispielsweise der Spanntrommel 11 und ihrer Anordnung, erreicht werden.

Im Falle eines Aufpralls des Fahrers auf die Lenksäule (Crash) wird durch Einstellung eines entsprechenden Absorptionszustandes die gewünschte Widerstandskraft, die eine Absorption bzw. Absorption der durch einen Aufprall des Fahrers auf das Lenkrad in die Lenksäule 1 eingetragene Energie bewirken soll, durch die Energieabsorptionseinrichtung 8 eingestellt. Hierzu erhält die Steuereinrichtung 23 zumindest einen Betriebsparameter 9 bzw. zumindest ein Crash-Signal und bestromt im Bedarfsfall den Draht der Spanntrommel 11 entsprechend. Dadurch wird eine entsprechende Spannkraft auf die reibschlüssige Verbindung zwischen der Konsoleneinheit 2 und dem mit der Lenkspindellagereinheit 3 bei geschlossener Feststelleinrichtung 5 fix verbundenen Zwischenbauteil 33 aufgebracht. Dies führt zu einem definierten Niveau der Widerstandskraft gegen die Verschiebung der Lenkspindellagereinheit 3 gegenüber dem Zwischenteil 33.

Wie auch anhand der weiteren Ausführungsbeispiele erläutert wird, kann diese Widerstandskraft durch die entsprechend eingestellte Bestromung des VerformungsElementes 6 bzw. Drahts sogar während des Crashvorgangs variiert werden, so das eine genaue Anpassung des Energieabsorptionsverhaltens an den Crashverlauf ermöglicht ist.

Beispielhaft sind in Fig. 3 der Arretierungszustand, also bevorzugt stromlose Betriebszustand, und in Fig. 4 ein Absorptionszustand veranschaulicht. Da die eingestellte Widerstandskraft im Absorptionszustand nur schwer darstellbar ist, wurde als Behelf zur Veranschaulichung in Fig. 4 ein Abstand zwischen den Reibflächen gewählt. Dies ist aber lediglich ein Behelf in der graphischen Darstellung. In dem in Fig. 4 dargestellten Absorptionszustand ist das Verformungs-Element 6 nur so stark bestromt, dass mittels des Rückstellelementes 10 die relativ zueinander bewegbaren Bauteile 2 und 33 immer noch reibschlüssig miteinander verbunden sind, wobei allerdings eine Widerstandskraft eingestellt ist, die der gewünschten Absorption von Energie beim relativ zueinander Verschieben der beiden Bauteile 2 und 33 entspricht. Im Arretierungszustand gem. Fig. 3 sind die durch das Rückstellelement 10 hervorgerufenen Widerstandskräfte günstigerweise so groß, dass die Bauteile 2 und 33 reibschlüssig aneinander fixiert sind.

Wird das Verformungs-Element 6 bzw. der Draht mit einem maximalen Strom Imax bestromt, erfolgt eine Erwärmung auf die obere Grenztemperatur Tmax und entsprechend dem Beispiel verkürzt sich der Draht. Dadurch verkürzt sich der Abstand zwischen den Platten 11, so dass die Reibflächen nur mit geringer Widerstandskraft gegeneinander gepresst sind. Dadurch wird eine untere Grenzkraft Fmin für die Widerstandskraft gegen die Verschiebung des Zwischenbauteils 33 gegenüber der Konsoleneinheit 2 eingestellt. Denkbar und möglich ist es sogar, dass sich ein kleines Spiel zwischen den Reibflächen einstellt, wie dies in Fig. 4 zur Veranschaulichung der niedrigeren Widerstandskraft übertrieben dargestellt ist.

Die Auslegung der Kräfte und Ströme und dergleichen ist an den weiteren Ausführungsbeispielen erläutert.

Auch wenn in den weiteren Ausführungsbeispielen meist eine Energieabsorptionseinrichtung 8 dargestellt ist, die mit einer Fixiereinrichtung 5 als eine Einheit ausgeführt ist, ist es jedoch denkbar und möglich, auch für diese Varianten der Erfindung die Fixierung und damit die Feststelleinrichtung 5 an anderer Stelle als gezeigt, zu realisieren und die Energieabsorptionseinrichtung 8 auf Kraftwerte zu dimensionieren, die nur für eine geeignete Energieabsorption und nicht für eine Fixierung erforderlich sind. In diesen Fällen können beispielsweise Systeme als Fixiereinrichtung Einsatz finden, bei denen die Fixierung im Crashfall gelöst wird. Alternativ können auch Zwischenbauteile 33 vorgesehen sein, wie dies im ersten Ausführungsbeispiel veranschaulicht ist. Die Systematik zur Auslegung der Kräfte und dergleichen ändert sich dadurch nicht und ist entsprechend analog übertragbar.

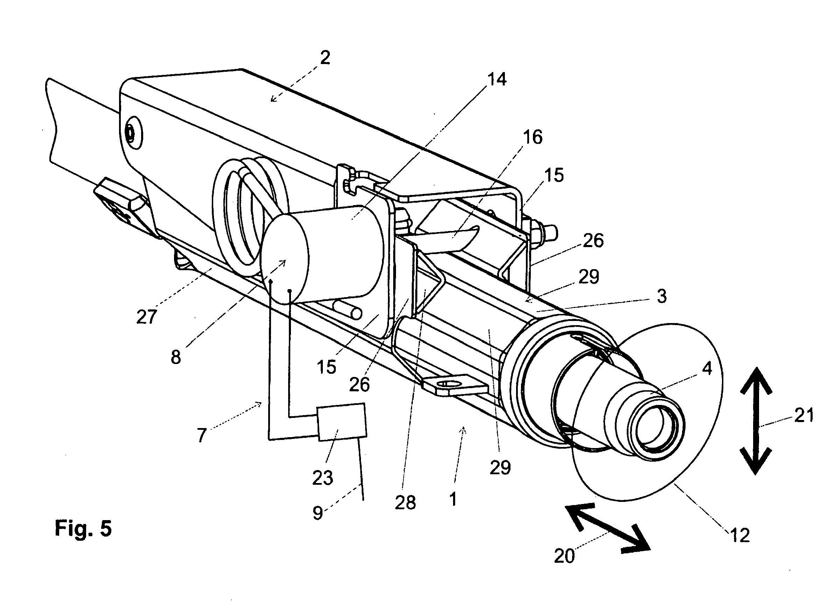

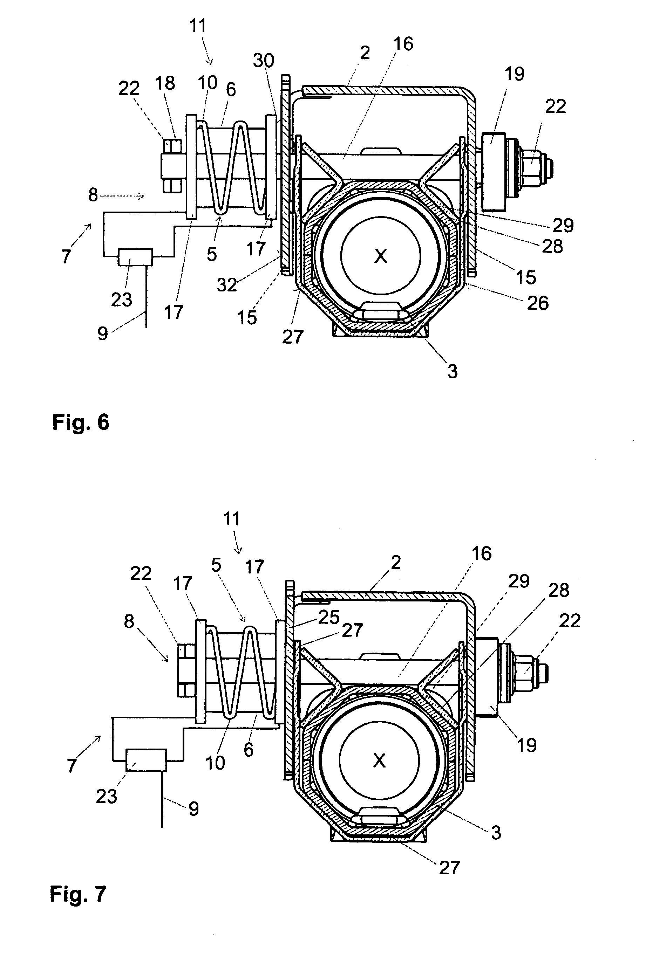

Das zweite Ausführungsbeispiel ist in den Fig. 5 bis 7 dargestellt. Es ist dem ersten Ausführungsbeispiel sehr ähnlich, nur dass die Energieabsorptionseinrichtung 8 und die Feststelleinrichtung 5 integriert ausgeführt sind bzw. beide Einrichtungen eine einzige Einrichtung darstellen. Fig. 5 zeigt eine perspektivische Darstellung der Lenksäule 1. Die Fig. 6 und 7 zeigen einen Vertikalschnitt im Bereich der Energieabsorptionseinrichtung 8. Der Grundaufbau der hier auch als Feststelleinrichtung eingesetzten Energieabsorptionseinrichtung 8 ähnelt dem ersten Ausführungsbeispiel. In der Schließstellung bzw. im Arretierungszustand gemäß Fig. 7 hält die Energieabsorptionseinrichtung 8 die Lenkspindellagereinheit 3 in ihrer Lage relativ zur fahrzeugfesten Konsoleneinheit 2 fixiert. Die Fixierung erfolgt dabei über die reibschlüssige Verbindung zwischen den Seitenwangen 15 der Konsoleneinheit 2 und Seitenflächen 26 eines Schwenkhebels 27 und zwischen Seitenflächen 28 des Schwenkhebels 27 und Seitenflächen 29 der Lenkspindellagereinheit 3. Erreicht wird die Fixierung mittels der Energieabsorptionseinrichtung 8, deren Seitenfläche 30 in dem Arretierungszustand gegen die Seitenfläche 32 der Seitenwange 15 gepresst wird. Dabei sollte der Arretierungszustand mit der oberen Grenzkraft Fmax korrespondieren. Im Verstellzustand der Energieabsorptionseinrichtung 8 gem. Fig. 6 kann die gewünschte Verstellung der Lenkspindellagereinheit 3 relativ zur fahrzeugfesten Konsoleneinheit 2 in den Richtungen 20 und/oder 21 vorgenommen werden. Entsprechend sollte der Versteltzustand mit der unteren Grenzkraft Fmin, die natürlich entsprechend klein sein soll, korrespondieren. Durch Überführen der Energieabsorptionseinrichtung 8 in den Arretierungszustand wird die Position der Lenkspindellagereinheit 3 relativ zur Konsoleneinheit 2 fixiert. Der Arretierungszustand sollte zumindest dann eingestellt sein, wenn das Fahrzeug bewegt wird. Die Konsoleneinheit 2 kann durch entsprechende Laschen (hier nicht weiter dargestellt), wie sie beim Stand der Technik bekannt sind, am Kraftfahrzeug montiert und damit fixiert werden.

Der Aufbau weist im zweiten Ausführungsbeispiel einen Spannbolzen 16 auf, welcher durch die Seitenwangen 15 hindurchgeführt ist. An den Enden des Spannbolzens 16 werden mittels Schrauben 22 der Anschlag 18 und das Widerlager 19 befestigt. Auf der linken Seite befindet sich zwischen dem Anschlag 18 und der Seitenwange 15 der Konsoleneinheit 2 die erfindungsgemäß ausgebildete Spanntrommel 11 der Energieabsorptionseinrichtung 8, die durch ein Gehäuse 14 abgedeckt ist. Diese Spanntrommel 11 wurde weiter oben anhand Fig. 2 bereits eingehend erläutert. Der Vollständigkeit halber sei aber noch darauf hingewiesen, dass bei diesem zweiten Ausführungsbeispiel die Druckfläche 30 und in Folge dessen auch das Widerlager 19 im Arretierungszustand so gegen die Seitenwangen 15 der Konsoleneinheit 2 gepresst werden, dass die Lenkspindellagereinheit 3 reibschlüssig klemmend zwischen den Seitenwangen 15 und damit an der Konsoleneinheit 2 in ihrer Position fixiert ist.

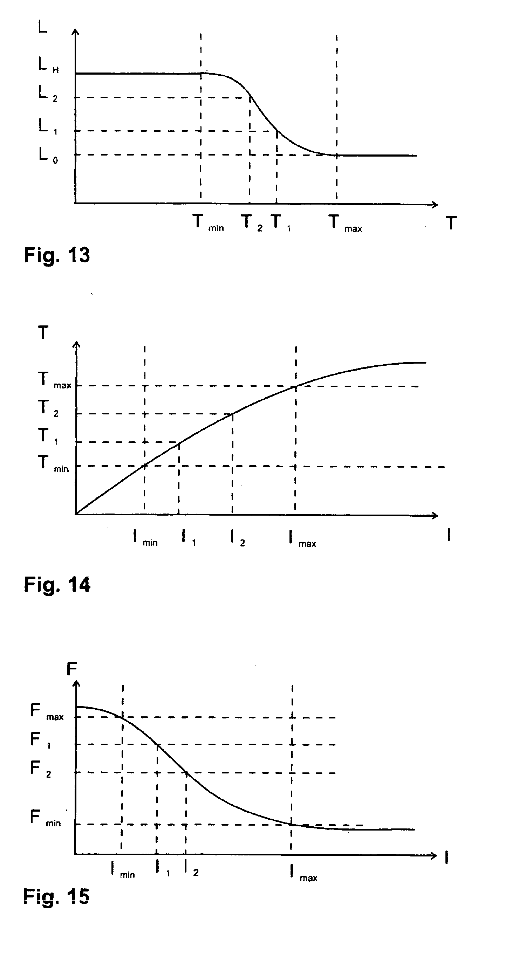

Im Verstellzustand gibt die Steuereinrichtung 23 der als Heizeinrichtung ausgebildeten Temperaturveränderungsvorrichtung 7 einen maximalen Strom Imax an das Verformungs-Element aus. Bei diesem Stromfluss erhitzt sich die Formgedächtnislegierung der Verformungs-Elemente 6 auf Grund ihres ohmschen Widerstandes über die obere Grenztemperatur Tmax, sodass es zur gewünschten Verkürzung des Drahtes der Verformungs-Elemente 6 auf die Länge L0 kommt. Hierdurch werden die Platten 17 gegen die Federkraft des Rückstellelementes 10 aufeinander zu bewegt, sodass die Lenkspindellagereinheit 3 nicht mehr zwischen den Seitenwangen 15 klemmend gehalten ist. Die Widerstandskraft gegen die Verschiebung der Lenkspindellagereinheit 3 unterschreitet damit den Wert der unteren Grenzkraft Fmin auf den die Energieabsorptionseinrichtung 8 bei der Konstruktion der Lenksäule ausgelegt wird (vgl. Fig. 13- 15). Fig. 7 zeigt den stromlosen Zustand der Energieabsorptionseinrichtung 8, bei dem sich diese im Arretierungszustand befindet, in dem die Lenkspindellagereinheit 3 in ihrer Lage relativ zur Konsoleneinheit 2 fixiert ist. Die Steuereinrichtung 23 führt in diesem Betriebszustand keinen Strom durch den Draht, so dass dieser nicht beheizt wird und die Temperaturveränderungsvorrichtung 7 somit ausgeschaltet ist. Die Temperatur des Drahtes 6 liegt in der Situation gemäß Fig. 7 unter der unteren Grenztemperatur Tmin, sodass das Rückstellelement 10 die Platten 17 auseinanderdrücken kann. Dadurch werden entsprechend dem ersten Ausführungsbeispiel die Seitenwangen und die korrespondierenden Flächenpaare 30, 32, 26, 27, 28, 29, und die Seitenwangen 15 mittels Spannbolzen 16 aufeinander zu gepresst, womit die Lenkspindellagereinheit 3 klemmend in ihrer Position fixiert ist. Die Widerstandkraft gegen die Verschiebung der Lenkspindllagereinheit 3 übersteigt damit den Wert der oberen Grenzkraft Fmax, auf den die Energieabsorptionseinrichtung 8 bei der Konstruktion der Lenksäule ausgelegt wird (vgl. Fig. 13-15).

Um den Schaltvorgang z.B. bei der Überführung der Energieabsorptionseinrichtung 8 vom Verstellzustand gemäß Fig. 6 in den Arretierungszustand gemäß Fig. 7 möglichst rasch ablaufen zu lassen, kann als zweite Temperaturveränderungsvorrichtung 7 eine aktive Kühleinrichtung vorgesehen sein. Diese kann als Gebläse, das im Gehäuse 14 der Energieabsorptionseinrichtung angeordnet ist, ausgebildet sein.

Es ist offensichtlich, dass die Einbringung einer aktiven Kühlung in jede der in dieser Beschreibung offenbarten Ausführungsformen wahlweise integriert werden kann aber nicht integriert werden muss.

Im Crashfall kann mittels der Steuereinrichtung 23 die Temperaturveränderungsvorrichtung 7, also der Stromfluss im Draht des Verformungs-Elementes 6 so eingestellt werden, dass die Seitenfläche 30 der Spanntrommel 11 so fest gegen die Seitenwangen 15 der Konsoleneinheit 2 gepresst wird, dass ein Verschieben der Lenkspindellagereinheit 3 relativ zur Konsoleneinheit 2 zur Absorption von Energie gegen entsprechende, von der Energieabsorptionseinrichtung 5 aufgebrachte Widerstandskräfte möglich ist. Die Stärke der reibschlüssigen Verbindung zwischen Konsoleneinheit 2 und Lenkspindellagereinheit 3 kann dabei durch eine entsprechende Ansteuerung der Temperaturveränderungseinrichtung 7, vorzugsweise kontinuierlich, an die zu absorbierenden Energien angepasst werden.

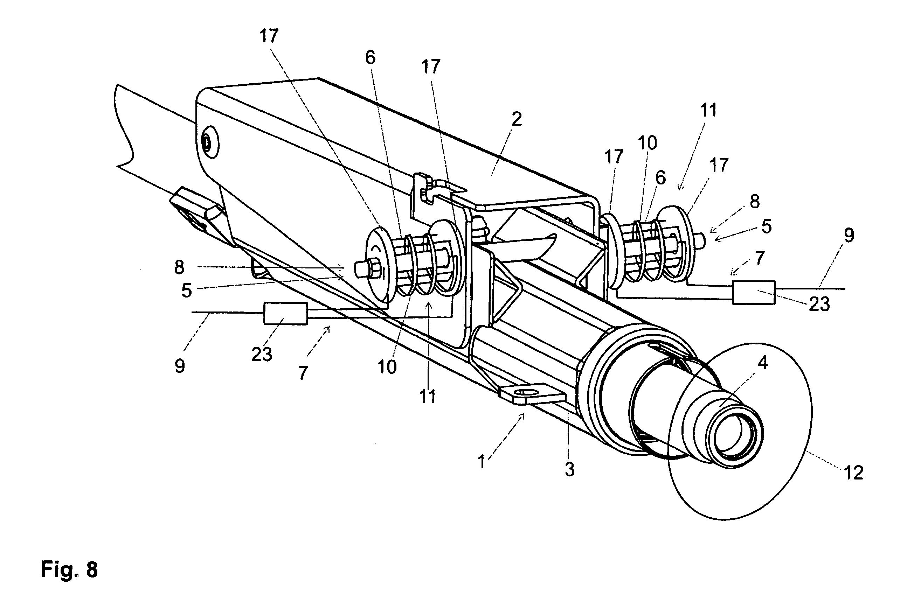

Es ist auch denkbar und möglich, auf dem einen gemeinsamen Spannbolzen 16 an den einander gegenüberliegenden Seiten der Lenkspindellagereinheit 3 außen an den Seitenwangen 15 zwei erfindungsgemäße Spanntrommeln 11 anzuordnen, wie dies in Fig. 8 veranschaulicht ist.

Diese beidseitige Anordnung der Spanntrommeln 11 gemäß Fig. 8 hat den Vorteil, dass der doppelte Hub, also eine doppelt so große Verformung der Seitenwangen 15 erreicht werden kann. Zusätzlich ermöglicht die beidseitige Trommellösung eine vereinfachte Einstellbarkeit der Widerstandskräfte im Absorptionszustand der Energieabsorptionseinrichtung 8. Es ist ohne weiteres denkbar und möglich, die unterschiedlichen Kraftniveaus für die Widerstandskraft gegen die Verschiebung der Lenkspindellagereinheit 3, dadurch einzustellen, dass entweder eine der beiden Energieabsorptionseinrichtungen 8 variiert wird oder beide der Energieabsorptionseinrichtungen 8 variiert werden. Insbesondere ist es sogar denkbar und möglich in einer Einfachausführung, nur eine der beiden Spanntrommeln 11 in den Absorptionszustand zu überführen und dadurch einen einzigen Zwischenwert zwischen der oberen Grenzkraft Fmax und der unteren Grenzkraft Fmin gegen die Verstellung der Lenkspindellagereinheit 3 einzustellen. In Fig. 8 sind zwei voneinander getrennte Kontrolleinheiten 23 dargestellt. Natürlich können beide Spanntrommeln 11 auch von einer gemeinsamen bzw. integrierten Steuereinrichtung 23 angesteuert werden.

Wie in den Beispielen veranschaulicht ist, kann die Bestromung des Drahtes des Verformungs-Elementes 6 auf verschiedene Weisen erfolgen. Entsprechend der Darstellung in den Ausführungsbeispielen, beispielsweise gemäß der Figuren 2, 3, 6 und 7, erfolgt die Bestromung des Drahtes durch eine Kontaktierung der beiden Enden des Drahtes mit der Steuereinrichtung 23, welche eine entsprechende Stromquelle aufweist. Für diesen Fall ist es erforderlich, die Umlenkstellen in den Platten 17, die auch als Umlenkrollen ausgebildet sein können, gegen Stromfluss isoliert auszulegen. Alternativ kann in allen Ausführungsbeispielen die Bestromung auch über die Platten 17 und/oder die Umlenkstellen und/oder die Umlenkrollen erfolgen, wie dies beispielsweise in der Figur 8 veranschaulicht ist. Entsprechend werden für diese Ausführung die Platten 17 und/oder die Umlenkstellen und/oder die Umlenkrollen mit der Steuereinrichtung 23 kontaktiert.

Alternativ zur Ausbildung der Energieabsorptionseinrichtung mit zylinderförmigen Platten 17, können die Platten 17 auch rechteckig, quadratisch oder vieleckig ausgebildet sein. Als Alternative kann auch der Draht des Verformungs-Elements 6 in verschiedenen Mustern zwischen den beiden Platten 17 hin und her geführt sein.

Weiter ist es denkbar und möglich, zwei oder mehrere Spannbolzen 16 parallel zueinander anzuordnen und jeweils eine oder zwei erfindungsgemäße Energieabsorptionseinrichtungen 8 darauf anzuordnen.

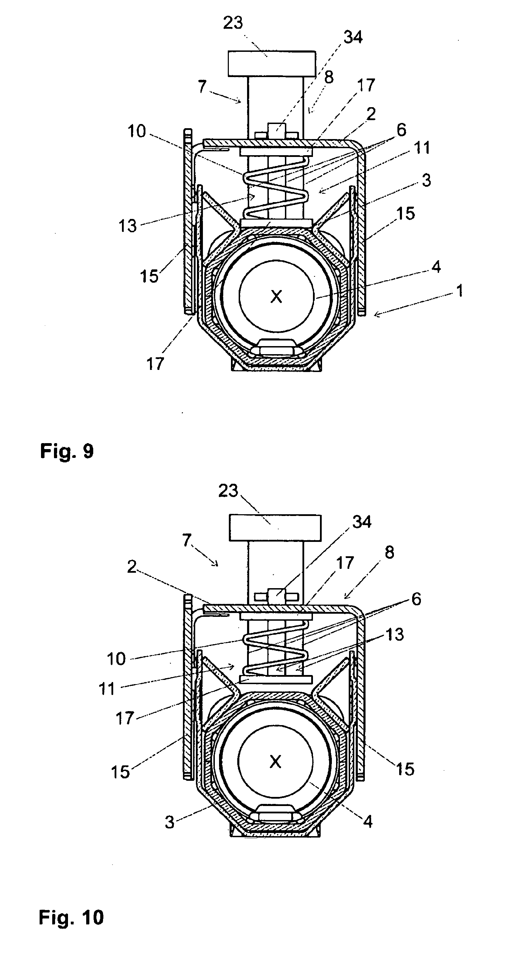

Die Fig. 9 und 10 zeigen ein weiteres erfindungsgemäßes Ausführungsbeispiel. Auch hier ist die Energieabsorptionseinrichtung 8 und die Fixiereinrichtung 5 in einem System ausgebildet. Dargestellt sind jeweils Vertikalschnitte durch eine Konsoleneinheit 2, Lenkspindellagereinheit 3 und Energieabsorptionseinrichtung 8. Bei diesem Ausführungsbeispiel gemäß der Fig. 9 und 10 ist die Lenkspindellagereinheit 3 nur in Längsrichtung der Lenkspindel 4 relativ zur Konsoleneinheit 2 verstellbar. Die Fixierung der Lenkspindellagereinheit 3 an der Konsoleneinheit 2 wird nicht durch Zusammendrücken der Seitenwangen 15, sondern durch eine stempelartig ausgebildete Energieabsorptionseinrichtung 8, welche von oben auf die Lenkspindellagereinheit 3 wirkt, erreicht. Fig. 9 zeigt den Arretierungszustand, in dem die Energieabsorptionseinrichtung 8 ein Verstellen der Lenkspindellagereinheit 3 relativ zur Konsoleneinheit 2 unterbindet. Fig. 10 zeigt den Verstellzustand, der für eine Anpassung der Position des Lenkrades an den Fahrer vorgesehen ist. Im Beispiel ist der Antrieb als Spanntrommel 11 ausgebildet, die über einen Befestigungsbolzen 34 an der Konsoleneinheit 2 befestigt ist, um sich dort abzustützen.

Auch hier sind zwei Platten 17 vorhanden, zwischen denen ein oder mehrere Drähten des Verformungs-Elementes 6 verlaufen. Als Rückstellelement 10 ist wiederum eine elastische Schraubenfeder ausgebildet, welche die beiden Platten 17 gegen die Spannung des Drahtes 6 auseinanderdrückt. Im stromlosen Zustand gemäß Fig. 9 ist die Länge des Drahtes 6 größer, so dass der Abstand der beiden Platten 17 größer ist, als dies im bestromten Zustand entsprechend der Fig. 10 der Fall ist. Im unbestromten Zustand werden die Platten 17 vom Rückstellelement 10 so weit auseinandergedrückt, dass sie einen so starken Reibschluss zwischen Konsoleneinheit 2 und Lenkspindellagereinheit 3 bewirken, dass sich das System im Arretierungszustand, welcher mit der oberen Grenzkraft Fmax korrespondiert, befindet, in dem die Lenkspindellagereinheit 3 in ihrer Position relativ zur Konsoleneinheit 2 fixiert ist. Leitet die Steuereinrichtung 23 einen Strom durch den Draht, so wird dieser beheizt und zieht sich zusammen, sobald die untere Grenztemperatur Tmin überschritten wird. Dadurch wird der Reibschluss zwischen der untere Platte 17 und der Lenkspindellagereinheit 3 gelockert. Bei Erreichen der oberen Grenztemperatur Tmax und damit des Verstellzustandes gem. Fig. 10 erfolgt ein Abheben der unteren Platte 17, was mit der unteren Grenzkraft Fmin korrespondiert. Im Verstellzustand kann die Position des Lenkrades bzw. der Lenkspindellagerreinheit 8 an den Fahrer angepasst werden.

Auch hier können analog, wie bei den anderen Beispielen erläutert, entsprechende Stromzwischenwerte eingestellt werden, sodass eine definierte Widerstandskraft oder verschiedene definierte Widerstandskräfte im Bereich zwischen der unteren Grenzkraft Fmin und oberen Grenzkraft Fmax, also im Absorptionszustand, gegen die Verstellung der Lenkspindellagereinheit 3 gegenüber der Konsoleneinheit 2 einstellbar ist bzw. sind, so dass eine gezielte Energieabsorption im Crashfall möglich ist.

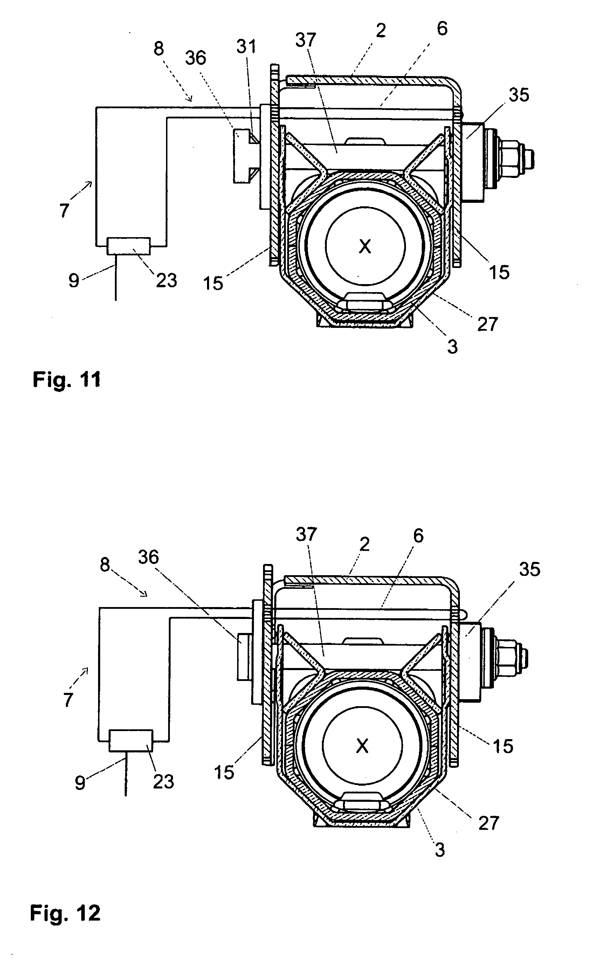

In den Fig. 11 und 12 ist eine alternative erfindungsgemäße Ausführungsform veranschaulicht, bei der der Draht des Verformungs-Elements 6 im höheren Temperaturbereich länger ist als im niedrigeren Temperaturbereich. Auch hier ist im Beispiel die Energieabsorptionseinrichtung 8 mit der Fixiereinrichtung 5 kombiniert realisiert. Der Draht wird im einfachsten Fall an einer der Seitenwangen 15 umgelenkt. Durch die Verkürzung des Drahts im niedrigeren Temperaturbereich ist in dem in Fig. 11 dargestellten Arretierungszustand der Abstand zwischen den beiden Seitenwangen 15 verkleinert, wodurch die Lenkspindellagereinheit 3 von der Konsoleneinheit 2 eingespannt und damit in ihrer Position fixiert ist. Die Köpfe 35, 36 des Führungsbolzens 37 sind mit einer Tellerfeder 31 gegen die Seitenwangen 15 verspannt, damit der Führungsbolzen 37, welcher in diesem Ausführungsbeispiel nicht als Spannbolzen 16 dient, nicht klappert, während die Drähte des Verformungs-Elementes 6 die Seitenwangen 15 gegen die Lenkspindellagereinheit 3 pressen.

Wird der Draht des Verformungs-Elements 6 in den höheren Temperaturbereich (vgl. Fig. 12) überführt, so weist der Draht eine größere Länge auf, sodass die Seitenwangen 15 sich auf Grund ihrer elastischen Rückstellkräfte entsprechend weit in Richtung von einander weg aufspreizen können, womit die Energieabsorptionseinrichtung 8 in den Verstellzustand wechselt. Hierzu wird von der Steuerung 23 ein Strom durch den Draht geleitet, der die Erwärmung für die Erreichung des höheren Temperaturbereichs bewirkt. Die Seitenwangen 15 spreizen sich auf und verspannen sich gegenüber den Köpfen 35 und 36 des Führungsbolzens 37. Dabei wird die Tellerfeder 31 zusammengedrückt. Eine geführte Verstellung der Lenkspindellagereinheit 3 gegenüber der Konsoleneinheit 2 ist damit in dem Verstellzustand gemäß Fig. 12 ermöglicht. Der Führungsbolzen 37 durchsetzt entsprechende Langlöcher in den Seitenwangen und dem Schwenkhebel 27, wodurch der Verstellbereich begrenzt wird. Auch in dieser Ausführungsvariante ist es möglich mittels der Steuereinrichtung 23 einen Strom durch den Draht zu leiten, der zwischen dem oberen Grenzstrom Imax und dem unteren Grenzstrom Imin liegt. Auf diese Weise können entsprechend (vgl. Fig. 15) definierbare Widerstandskräfte gegen die Verschiebung der Lenkspindellagereinheit 3 im Absorptionszustand aufgebracht werden.

Die Variante gemäß Fig. 11 und 12 zeigt unter anderem beispielhaft, dass es nicht unbedingt notwendig ist, ein Rückstellelement 10 als zusätzliches Bauteil vorzusehen. Es können, wie in dieser Variante beispielhaft anhand der elastischen Rückstellkräfte der Seitenwangen 15 gezeigt, auch, vorzugsweise elastische, Rückstellkräfte in der Konsoleneinheit 2 und/oder der Lenkspindellagereinheit 3 als Rückstellelement 10 genutzt werden.

Auch für dieses Ausführungsbeispiel entsprechend den Fig. 11 und 12 kann die Bestromung des Drahtes alternativ auch über die Seitenwangen 15 oder die nicht einzeln dargestellten Umlenkstellen oder Umlenkrollen erfolgen.

Denkbar und möglich ist es auch, eine erfindungsgemäße Ausführungsform ähnlich zu den Fig. 11 und 12 mit einem Verformungs-Element zu realisieren, dessen Länge in einem niedrigeren Temperaturbereich größer ist als in einem höheren Temperaturbereich. In diesem Fall müsste zur Fixierung der Lenkspindellagereinheit 3 gegenüber der Konsoleneinheit 2 die Steuereinrichtung 23 den Draht bestromen.

Die Figuren 13,14 und 15 veranschaulichen beispielhaft, wie eine entsprechende Längenveränderung und daraus resultierende Veränderung der Widerstandskraft, gegen eine Verschiebung der beiden, relativ zueinander bewegbaren Bauteile einstellbar ist. Dies wird am Beispiel des Einsatzes einer Formgedächtnislegierung, die bei einer höheren Temperatur eine kürzere Länge aufweist als bei einer niedrigen Temperatur, im Folgenden veranschaulicht und erläutert. Bei Raumtemperatur beziehungsweise einer entsprechend in einem Kraftfahrzeug als Raumtemperatur anzusehenden Temperatur, hat die als Draht ausgebildete Formgedächtnislegierung zunächst eine Länge LH. Bei einem Kraftfahrzeug ist dieser Temperaturbereich üblicherweise zwischen -40° und +80° anzusetzen. Entsprechend muss die Formgedächtnislegierung ausgewählt werden, die für diesen Draht eingesetzt wird. Übersteigt die Temperatur eine untere Grenztemperatur Tmin, so beginnt sich die Länge des Drahtes zu verkürzen. Um den Anforderungen in einem Kraftfahrzeug Rechnung zu tragen, sollte diese untere Grenztemperatur Tmin > 90° oder bevorzugt > 100° betragen. Steigt die Temperatur des Verformungs-Elementes 6 über diese untere Grenztemperatur Tmin weiter an, so verringert sich die Länge des Drahtes bzw. Verformungs-Elementes 6, bis eine obere Grenztemperatur Tmax erreicht ist, ab der sich die Länge des Drahtes nur unwesentlich verändert. Um die Energieabsorptionseinrichtung 8 als Energieabsorptionsmittel im Crashfall zu verwenden, muss daher im Crashfall eine Temperatur innerhalb des Bereiches zwischen und einschliesslich den Grenztemperaturen Tmin und Tmax eingestellt werden. Es ist allerdings auch denkbar und möglich als erste Temperatur einfach die Raumtemperatur zu wählen und dafür ein definiertes Kraftniveau für die Verschiebung bei der Konstruktion des Lenksystems derart auszulegen, dass eine erste geeignete Energieabsorption und keine Fixierung erfolgt. Derartige Systeme sind dann in der Regel nicht gleichzeitig als Feststelleinrichtung geeignet.

Bezogen auf das in den Fig. 13 bis 15 gezeigte Ausführungsbeispiel liegt der erste Temperaturbereich, in dem sich die Energieabsorptionseinrichtung 8 im Arretierungszustand befindet, unterhalb der Temperatur Tmin. Der mittlere Betriebszustand, in dem sich die Energieabsorptionseinrichtung 8 im Absorptionszustand befindet, liegt im Intervall zwischen Tmin und Tmax. Der Verstellzustand wird im Temperaturbereich oberhalb Tmax erreicht.

In der Figur 14 ist veranschaulicht, wie eine entsprechende Temperatur T durch einen Stromfluss I durch den Draht eingestellt werden kann. Mit anwachsenden Strom I steigt die Temperatur T im Draht. Nach erreichen eines unteren Grenzstroms Imin ist die untere Grenztemperatur Tmin im Draht erreicht und nach Erreichen eines oberen Grenzstroms Imax ist die entsprechende obere Grenztemperatur Tmax im Draht erreicht. Wird dieser Draht entsprechend der Erfindung in einer Energieabsorptionseinrichtung 8 eingesetzt, beispielsweise in der gezeigten Art als Komponente in einer Spanntrommel 11, so ergibt sich aus der jeweiligen Länge eine entsprechende Spannkraft zur Verspannung der Lenksäulenlagereinheit 3 gegenüber der Konsoleneinheit 2. Durch ein entsprechendes Design können dabei entsprechende Kraftwerte, die als Widerstandskraft gegen eine Verschiebung der relativ zueinander bewegbaren Bauteile wirken, dimensioniert werden. Im Falle des Einsatzes der Energieabsorptionseinrichtung 8 auch als Feststelleinrichtung 5 ist sicherzustellen, dass für die erste Stellung der Energieabsorptionseinrichtung 8, eine vom Fahrzeughersteller vorgegebene obere Grenzkraft Fmax erreicht wird. Derartige obere Grenzkräfte Fmax liegen üblicherweise in Bereichen größer 5000 N oder sogar größer 10000 N.

Im Falle des Einsatzes der Energieabsorptionseinrichtung 8 auch als Feststelleinrichtung 5 soll in dem Verstellzustand der Energieabsorptionseinrichtung 8 der Fahrer die Lenkspindellagereinheit, beziehungsweise das an der Lenkspindel 4 befestigte Lenkrad 12, leicht verschieben können, wobei leicht bedeutet, dass die Widerstandskraft eine vorgegebene untere Grenzkraft Fmin nicht überschreiten soll. Auch dieser Wert kann im Design entsprechend ausgelegt werden, wobei die Drahtlänge, die Anzahl der Umlenkungen, der Abstand der beiden Platten 17, die Größe der beiden Platten 17 und noch weitere Parameter, auch der Lenksäule selbst, zur Dimensionierung genutzt werden können. Es ist auch denkbar und möglich, eine, zwei oder auch mehrere Spanntrommeln 11 einzusetzen, um die geforderten Parameter zu erreichen.

Es ist aber auch denkbar und möglich, die Energieabsorptionseinrichtung 8 derart auszulegen, dass die Widerstandskraft in einem Bereich liegt, dass immer eine Verschiebung der relativ zueinander bewegbaren Bauteile der Lenksäule ermöglicht ist, sodass kein Arretierzustand vorhanden ist. In diesem Fall liegt die obere Grenzkraft Fmax im Bereich des Absorptionszustandes. Es ist ebenso denkbar und möglich, dass die untere Grenzkraft Fmin im Bereich des Absorptionszustandes ist. In diesem Fall ist gibt es keinen Arretierzustand und/oder Verstellzustand.

Es ist offensichtlich, dass diese Dimensionierungen in entsprechenden Versuchen zu überprüfen sind.

Weiterhin ist es möglich, im Absorptionszustand mit der erfindungsgemäßen Energieabsorptionseinrichtung 8, Zwischenwerte F1, F2 für die Widerstandskraft gegen die Verstellung der Lenkspindellagereinheit kontinuierlich oder abgestuft einzustellen. Auf diese Weise können für verschiedene Parameter (großer, schwerer Fahrer, kleiner, leichter Fahrer, Fahrer angegurtet, Fahrer nicht angegurtet, Fahrzeuggeschwindigkeit, usw...) entsprechende Werte der Widerstandskraft definiert und im Crashfall eingestellt werden. Als Beispiel sind in der Figur 15, zwei Kraftniveaus F1 und F2 dargestellt, die durch entsprechende Bestromung des Drahtes 6 mit dem Strom I1 und I2 einstellbar sind.

Wie in den Figuren 13 und 14 veranschaulicht, korrespondieren die Stromwerte I1 und I2 mit entsprechenden Temperaturen T1 und T2 und diese wiederum mit entsprechenden Längen L1 und L2 des Drahtes. Durch diese Korrelation ist die Auslegung der Anordnung einfach möglich.

Auf diese Weise stellt die Erfindung eine technische Lösung bereit, bei der es möglich ist, auf einfache Weise das Energieabsorptionsverhalten der Lenksäule an bestimmte Randbedingungen anzupassen.

Die Vielzahl der verschiedenen gezeigten Ausführungsbeispiele zeigt, dass die Erfindung in sehr vielen verschiedenen Varianten ausgebildet sein kann.

### Legende

### zu den Hinweisziffern:

| | | | |
|---|---|---|---|
| 1 | Lenksäule | 20 | Richtung |
| 2 | Konsoleneinheit | 21 | Richtung |
| 3 | Lenkspindellagereinheit | 22 | Schraube |
| 4 | Lenkspindel | 23 | Steuereinrichtung |
| 5 | Feststelleinrichtung | 24 | Umlenkstelle |
| 6 | Verformungs-Element | 25 | Stellhebel |
| 7 | Temperaturveränderungsvorrichtung | 26 | Seitenfläche |
| | | 27 | Schwenkhebel |
| 8 | Energieabsorptionseinrichtung | 28 | Seitenfläche |
| 9 | Betriebsparameter | 29 | Seitenfläche |
| 10 | Rückstellelement | 30 | Seitenfläche |
| 11 | Spanneinrichtung | 31 | Tellerfeder |
| 12 | Bereich | 32 | Seitenfläche |
| 13 | passive Kühleinrichtung | 33 | Zwischenbauteil |
| 14 | Gehäuse | 34 | Befestigungsbolzen |
| 15 | Seitenwange | 35 | Kopf |
| 16 | Spannbolzen | 36 | Kopf |
| 17 | Platte | 37 | Führungsbolzen |
| 18 | Anschlag | 38 | gerundete Umlenkstelle |
| 19 | Widerlager | 39 | Rolle |

## Patentansprüche

1. Lenksäule (1) für ein Fahrzeug, wobei die Lenksäule (1) eine Energieabsorptionseinrichtung (8) zur Absorption von Energie im Falle eines Fahrzeugcrashes aufweist und die Energieabsorptionseinrichtung (8) zumindest im Falle des Fahrzeugcrashes mindestens zwei relativ zueinander bewegbare, insbesondere relativ zueinander verschiebbare, Bauteile der Lenksäule (1) zur Absorption der Energie miteinander verbindet, **dadurch gekennzeichnet, dass** die Energieabsorptionseinrichtung (8) zumindest ein sich durch thermische Beaufschlagung verformendes Verformungs-Element (6) und zumindest eine Temperaturveränderungsvorrichtung (7) zur Änderung der Temperatur des VerformungsElementes (6) aufweist.

2. Lenksäule (1) nach Anspruch 1, **dadurch gekennzeichnet, dass** die Temperatur des Verformungs-Elementes (6) mittels der Temperaturveränderungsvorrichtung (7) in Abstufungen und/oder kontinuierlich zwischen zumindest zwei, vorzugsweise zwischen zumindest drei, Temperaturwerten veränderbar ist, wobei die Energieabsorptionseinrichtung (8) die mindestens zwei relativ zueinander bewegbaren Bauteile der Lenksäule (1) bei den verschiedenen Temperaturen unterschiedlich fest miteinander verbindet.

3. Lenksäule (1) nach Anspruch 1 oder 2, **dadurch gekennzeichnet, dass** die Energieabsorptionseinrichtung (8) einen ersten Betriebszustand, bei dem sich die Temperatur des Verformungs-Elementes (6) in einem ersten Temperaturbereich befindet, und zumindest einen zweiten Betriebszustand, bei dem sich die Temperatur des Verformungs-Elementes (6) in einem vom ersten Temperaturbereich verschiedenen zweiten Temperaturbereich befindet, und zumindest einen mittleren Betriebszustand, bei dem sich die Temperatur des VerformungsElementes (6) in einem mittleren Temperaturbereich zwischen dem ersten Temperaturbereich und dem zweiten Temperaturbereich befindet, aufweist, wobei die Energieabsorptionseinrichtung (8) die relativ zueinander bewegbaren Bauteile der Lenksäule (1) in dem ersten Betriebszustand stärker als in dem mittleren Betriebszustand und im mittleren Betriebszustand stärker als im zweiten Betriebszustand miteinander verbindet und zumindest einer der, vorzugsweise alle, Betriebszustände mittels der Temperaturveränderungsvorrichtung (7) einstellbar ist bzw. sind.

4. Lenksäule (1) nach einem der vorangehenden Ansprüche, **dadurch gekennzeichnet, dass** das Verformungs-Element (6) zumindest bereichsweise als Draht oder Band ausgebildet ist und dessen Länge sich durch die Einstellung von verschiedenen Temperaturen des Verformungs-Elements (6) unter Verwendung der Temperaturveränderungsvorrichtung (7) um zumindest 3% verändert.

5. Lenksäule (1) nach einem der vorangehenden Ansprüche, **dadurch gekennzeichnet, dass** die Lenksäule (1) eine Steuereinrichtung (23) zur Ansteuerung der zumindest einen Temperaturveränderungsvorrichtung (7), vorzugsweise in Abhängigkeit zumindest eines gemessenen Betriebsparameters (9) des Kraftfahrzeugs, aufweist.

6. Lenksäule (1) nach einem der vorangehenden Ansprüche, **dadurch gekennzeichnet, dass** eines der relativ zueinander bewegbaren Bauteile eine zur fahrzeugfesten Fixierung am Fahrzeug vorgesehene Konsoleneinheit (2) und das relativ dazu bewegbare Bauteil eine Lenkspindellagereinheit (3) zur drehbaren Lagerung einer Lenkspindel (4) ist oder dass eines der relativ zueinander bewegbaren Bauteile ein Zwischenbauteil (33) ist, welches zwischen der Konsoleneinheit (2) und der Lenkspindellagereinheit (3) angeordnet ist, und das relativ zum Zwischenbauteil (33) bewegbare Bauteil die Konsoleneinheit (2) oder die Lenkspindellagereinheit (3) ist.

7. Lenksäule (1) nach einem der vorangehenden Ansprüche, **dadurch gekennzeichnet, dass** das Verformungs-Element (6) eine Formgedächtnislegierung aufweist oder daraus besteht.

8. Lenksäule (1) nach einem der vorangehenden Ansprüche, **dadurch gekennzeichnet, dass** mindestens eine der Temperaturveränderungsvorrichtungen (7) elektrisch ansteuerbar ist.

9. Lenksäule (1) nach einem der vorangehenden Ansprüche, **dadurch gekennzeichnet, dass** das Verformungs-Element (6) zumindest bereichsweise als Draht oder Band ausgebildet ist, dessen Länge bei einer höheren Temperatur kürzere Werte annimmt als bei einer niedrigeren Temperatur.

10. Spanneinrichtung (11), insbesondere für eine Energieabsorptionseinrichtung (8) einer Lenksäule nach einem der vorangehenden Ansprüche, **dadurch gekennzeichnet, dass** die Spanneinrichtung (11) zumindest zwei Platten (17) sowie zumindest ein, zumindest bereichsweise als Draht oder Band ausgeführtes und sich durch thermische Beaufschlagung verformendes Verformungs-Element (6), vorzugsweise aus oder mit einer Formgedächtnislegierung, sowie zumindest ein, vorzugsweise elastisches, Rückstellelement (10) aufweist, wobei die Platten (17) mittels des Verformungs-Elements (6), vorzugsweise voneinander beabstandet, miteinander verbunden sind und das Rückstellelement (10) zumindest teilweise, vorzugsweise zumindest in einer Richtung, einer durch thermische Beaufschlagung des Verformungs-Elements (6) hervorgerufenen Kraft auf die Platten (17) entgegen wirkt.

11. Verfahren zum Betrieb einer Lenksäule (1) nach einem der Ansprüche 1 bis 9, **dadurch gekennzeichnet, dass** im Falle eines Fahrzeugcrashes mindestens zwei relativ zueinander bewegbare, insbesondere relativ zueinander verschiebbare, Bauteile der Lenksäule (1) relativ zueinander bewegt werden, wobei die Energieabsorptionseinrichtung (8) die Bauteile zur Absorption der Energie miteinander verbindet.

## Claims

1. A steering column (1) for a vehicle, wherein the steering column (1) has an energy absorption device (8) for the absorption of energy in the event of a vehicle crash and, at least in the event of the vehicle crash, the energy absorption device (8) connects to one another for the absorption of the energy at least two components, movable relative to one another, in particular slidable relative to one another, of the steering column (1), **characterized in that** the energy absorption device (8) has at least one deforming element (6), deforming through application of heat, and at least one temperature changing device (7) for changing the temperature of the deforming element (6).

2. A steering column (1) according to claim 1, **characterized in that** the temperature of the deforming element (6) is changeable, by means of the temperature changing device (7), in a stepped and/or continuous manner between at least two, preferably between at least three, temperature values, wherein the energy absorption device (8) connects the at least two components, movable relative to one another, of the steering column (1) to one another with differing strength at the different temperatures.

3. A steering column (1) according to claim 1 or 2, **characterized in that** the energy absorption device (8) has a first operating condition in which the temperature of the deforming element (6) is located in a first temperature range and at least one second operating condition in which the temperature of the deforming element (6) is located in a second temperature range differing from the first temperature range, and at least one middle operating condition in which the temperature of the deforming element (6) is located in a middle temperature range between the first temperature range and the second temperature range, wherein the energy absorption device (8) connects the components, movable relative to one another, of the steering column (1) more strongly to one another in the first operating condition than in the middle operating condition and more strongly in the middle operating condition than in the second operating condition and at least one, preferably all, of the operating conditions is or are adjustable by means of the temperature changing device (7).

4. A steering column (1) according to any one of the preceding claims, **characterized in that** at least regions of the deforming element (6) are in the form of a wire or band and its length changes by at least 3% by setting different temperatures of the deforming element (6) using the temperature changing device (7).

5. A steering column (1) according to any one of the preceding claims, **characterized in that** the steering column (1) has a control device (23) for driving the at least one temperature changing device (7), preferably dependent on at least one measured operating parameter (9) of the motor vehicle.

6. A steering column (1) according to any one of the preceding claims, **characterized in that** one of the components movable relative to one another is a bracket unit (2) provided for fixing to the vehicle in a manner so as to be secure with the vehicle and the component movable relative thereto is a steering spindle bearing unit (3) for rotatable mounting of a steering spindle (4) or **in that** one of the components movable relative to one another is an intermediate component (33) arranged between the bracket unit (2) and the steering spindle bearing unit (3) and the component movable relative to the intermediate component (33) is the bracket unit (2) or the steering spindle bearing unit (3).

7. A steering column (1) according to any one of the preceding claims, **characterized in that** the deforming element (6) has a shape-memory alloy or is made thereof.

8. A steering column (1) according to any one of the preceding claims, **characterized in that** at least one of the temperature changing devices (7) is electrically drivable.

9. A steering column (1) according to any one of the preceding claims, **characterized in that** at least regions of the deforming element (6) are in the form of a wire or band whose length assumes shorter values at a higher temperature than at a lower temperature.

10. A tensioning device (11), in particular for an energy absorption device (8) of a steering column according to any one of the preceding claims, **characterized in that** the tensioning device (11) has at least two plates (17) as well as at least one deforming element (6), at least regions of which are in the form of a wire or band and which deforms through the application of heat and which is preferably of or with a shape-memory alloy, as well as at least one, preferably resilient, restoring element (10), wherein the plates (17) are connected to one another, preferably at a distance from one another, by means of the deforming element (6) and the restoring element (10) at least partially, preferably at least in one direction, counteracts a force on the plates (17) brought about through the application of heat to the deforming element (6).

11. A method of operating a steering column (1) according to any one of claims 1 to 9, **characterized in that** in the event of a vehicle crash, at least two components, movable relative to one another, in particular slidable relative to one another, of the steering column (1) are moved relative to one another, wherein the energy absorption device (8) connects the components to one another for absorption of the energy.

## Revendications

1. Colonne de direction (1) pour un véhicule, dans laquelle la colonne de direction (1) présente un dispositif d'absorption d'énergie (8) destiné à absorber de l'énergie en cas de collision du véhicule et le dispositif d'absorption d'énergie (8) relie l'un à l'autre, au moins en cas de collision du véhicule, au moins deux composants de la colonne de direction (1) mobiles l'un par rapport à l'autre, en particulier coulissants l'un par rapport à l'autre, en vue de l'absorption de l'énergie, **caractérisée en ce que** le dispositif d'absorption d'énergie (8) présente au moins un élément de déformation (6) se déformant par sollicitation thermique et au moins un dispositif de variation de la température (7) destiné à faire varier la température de l'élément de déformation (6).

2. Colonne de direction (1) selon la revendication 1, **caractérisée en ce que** la température de l'élément de déformation (6) peut être modifiée, au moyen du dispositif de variation de la température (7), par paliers et/ou de manière continue, entre au moins deux, de préférence entre au moins trois valeurs de température, dans laquelle le dispositif d'absorption d'énergie (8) relie solidement l'un à l'autre, d'une manière différente pour les différentes températures, lesdits au moins deux composants de la colonne de direction (1) mobiles l'un par rapport à l'autre.

3. Colonne de direction (1) selon la revendication 1 ou 2, **caractérisée en ce que** le dispositif d'absorption d'énergie (8) présente un premier état de fonctionnement, dans lequel la température de l'élément de déformation (6) se trouve dans une première plage de température, et au moins un deuxième état de fonctionnement, dans lequel la température de l'élément de déformation (6) se trouve dans une deuxième plage de température différente de la première plage de température, et au moins un état de fonctionnement intermédiaire, dans lequel la température de l'élément de déformation (6) se trouve dans une plage de température intermédiaire entre la première plage de température et la deuxième plage de température, dans laquelle le dispositif d'absorption d'énergie (8) relie les composants de la colonne de direction (1) mobiles l'un par rapport à l'autre plus fortement dans le premier état de fonctionnement que dans l'état de fonctionnement intermédiaire et plus fortement dans l'état de fonctionnement intermédiaire que dans le deuxième état de fonctionnement et au moins un des, de préférence tous les états de fonctionnement est/sont réglable(s) au moyen du dispositif de variation de la température (7).

4. Colonne de direction (1) selon l'une quelconque des revendications précédentes, **caractérisée en ce que** l'élément de déformation (6) est réalisé au moins localement sous la forme d'un fil ou d'une bande et sa longueur varie d'au moins 3 % par le réglage de différentes températures de l'élément de déformation (6) en utilisant le dispositif de variation de la température (7).

5. Colonne de direction (1) selon l'une quelconque des revendications précédentes, **caractérisée en ce que** la colonne de direction (1) présente un dispositif de commande (23) pour commander ledit au moins un dispositif de variation de la température (7), de préférence en fonction d'au moins un paramètre de fonctionnement mesuré (9) du véhicule automobile.

6. Colonne de direction (1) selon l'une quelconque des revendications précédentes, **caractérisée en ce qu'**un des composants mobiles l'un par rapport à l'autre est une unité de console (2) prévue pour la fixation au véhicule, de façon solidaire au véhicule, et le composant mobile par rapport à celui-ci est une unité de palier d'arbre de direction (3) pour l'appui rotatif d'un arbre de direction (4) ou **en ce qu'**un des composants mobiles l'un par rapport à l'autre est un composant intermédiaire (33), qui est disposé entre l'unité de console (2) et l'unité de palier d'arbre de direction (3), et le composant mobile par rapport au composant intermédiaire (33) est l'unité de console (2) ou l'unité de palier d'arbre de direction (3).

7. Colonne de direction (1) selon l'une quelconque des revendications précédentes, **caractérisée en ce que** l'élément de déformation (6) comprend un alliage à mémoire de forme ou en est constitué.

8. Colonne de direction (1) selon l'une quelconque des revendications précédentes, **caractérisée en ce qu'**au moins un des dispositifs de variation de la température (7) peut être commandé par voie électrique.

9. Colonne de direction (1) selon l'une quelconque des revendications précédentes, **caractérisée en ce que** l'élément de déformation (6) est réalisé au moins localement sous la forme d'un fil ou d'une bande, dont la longueur prend des valeurs plus courtes à une température plus haute qu'à une température plus basse.

10. Dispositif de tension (11), en particulier pour un dispositif d'absorption d'énergie (8) d'une colonne de direction selon l'une quelconque des revendications précédentes, **caractérisé en ce que** le dispositif de tension (11) comprend au moins deux plaques (17) ainsi qu'au moins un élément de déformation (6) réalisé au moins localement sous la forme d'un fil ou d'une bande et se déformant sous une sollicitation thermique, de préférence constitué de ou contenant un alliage à mémoire de forme, ainsi qu'au moins un élément de rappel (10), de préférence élastique, dans lequel les plaques (17) sont reliées l'une à l'autre, de préférence à distance l'une de l'autre, au moyen de l'élément de déformation (6) et l'élément de rappel (10) s'oppose au moins partiellement, de préférence au moins dans une direction, à une force agissant sur les plaques (11) provoquée par une sollicitation thermique de l'élément de déformation (6).

11. Procédé de fonctionnement d'une colonne de direction (1) selon l'une quelconque des revendications 1 à 9, **caractérisé en ce que**, en cas d'une collision du véhicule, au moins deux composants de la colonne de direction (1) mobiles l'un par rapport à l'autre, de préférence coulissants l'un par rapport à l'autre, sont déplacés l'un par rapport à l'autre, le dispositif d'absorption d'énergie (8) reliant les composants l'un à l'autre en vue de l'absorption de l'énergie.
